# EUROPEAN PATENT SPECIFICATION

(11) **EP 3 379 680 B1**
(45) Date of publication and mention of the grant of the patent: **01.04.2020**
(21) Application number: 16865924.1
(22) Date of filing: 09.11.2016
(51) Int. Cl.: H02J 7/00, H01M 10/44, H01M 10/48, H02J 7/02, H02J 7/34, H02J 7/35

(54) **CHARGING DEVICE AND ELECTRONIC DEVICE**
LADEVERFAHREN UND ELEKTRONISCHE VORRICHTUNG
DISPOSITIF DE CHARGE ET DISPOSITIF ÉLECTRONIQUE

(30) Priority: 17.11.2015 JP 2015224840
(43) Date of publication of application: 26.09.2018
(73) Proprietor: Zeon Corporation, Tokyo 100-8246 (JP)
(72) Inventor: YAMAAI, Midori, Tokyo 100-8246 (JP); KOJIMA, Kiyoshige, Tokyo 100-8246 (JP); YOSHIDA, Masayoshi, Tokyo 100-8246 (JP)
(74) Representative: Maiwald Patent- und Rechtsanwaltsgesellschaft mbH
(86) International application number: PCT/JP2016/004846
(87) International publication number: WO 2017/085920

(56) References cited:
- EP-A1- 2 595 236
- DE-T5-112013 001 460
- JP-A- H09 121 461
- JP-A- 2010 098 874
- JP-A- 2014 068 485
- US-A1- 2013 134 784

## Description

### TECHNICAL FIELD

The present disclosure relates to a charging device and an electronic device that store power generated by energy harvesting and supply the stored power to a charging target.

### BACKGROUND

In recent years, there has been growing demand for charging devices for charging electronic devices such as smartphones, notebook personal computers (PCs), and tablet PCs so that users can use electronic devices even in outside locations and the like where commercial power supplies are not available. For example, such a charging device includes a secondary battery which can be charged and discharged, stores, in the secondary battery, power from a commercial power supply or a solar power generation module for solar power generation, and supplies the power stored in the secondary battery to an external device (electronic device). Power generation by converting nonelectrical energy in the environment into electrical energy, such as solar power generation, is also referred to as energy harvesting.

EP 2651003 A1 (PTL 1) discloses an example of the above-mentioned charging device. A charging device disclosed in PTL 1 includes two batteries that can be charged and discharged. The charging device disclosed in PTL 1 charges one battery with power generated by energy harvesting, and discharges the other battery to supply stored power to an external device. When the remaining battery level of the battery being discharged becomes less than or equal to a predetermined threshold, in the case where the remaining battery level of the battery being charged is greater than or equal to the predetermined threshold, the charging device disclosed in PTL 1 discharges the charged battery to supply stored power to the external device, and charges the discharged battery by energy harvesting. If the remaining battery levels of both batteries are less than or equal to the predetermined threshold, the charging device disclosed in PTL 1 directly supplies power generated by energy harvesting to the external device. Further prior art is disclosed in US 2013/0134784 A1

### CITATION LIST

### Patent Literature

PTL 1: EP 2651003 A1

### SUMMARY

### (Technical Problem)

It is desirable that the above-mentioned charging device charges the charging target device as speedily as possible with minimum wastage of power.

The charging device disclosed in PTL 1 directly supplies power generated by energy harvesting to the external device, in the case where the remaining battery levels of both batteries are less than or equal to the predetermined threshold because the amount of power generated by energy harvesting is less than the amount of discharge to the external device, or the remaining battery levels of both batteries are less than or equal to the threshold in an initial state or the like.

The device to be supplied with power might reject power supply, in the case where supplied power does not meet a required current/voltage value. In such a case, if power generated by energy harvesting is low or power fluctuates widely, generated power is not used effectively and power wastage ensues.

When the remaining battery level of the battery being discharged becomes less than or equal to the predetermined threshold, in the case where the remaining battery level of the battery being charged is greater than or equal to the predetermined threshold, the charging device disclosed in PTL 1 performs switching between the batteries subjected to charging and discharging. Here, if the remaining battery levels of both batteries are close to the threshold, switching between the batteries subjected to charging and discharging might take place frequently. Such frequent switching increases power consumption, and causes power wastage.

It could therefore be helpful to provide a charging device and an electronic device that can speedily charge a charging target device while suppressing power wastage, in response to fluctuating power generation.

### (Solution to Problem)

The inventors of the present disclosure have made extensive studies, and consequently discovered that a charging target device can be speedily charged while suppressing power wastage in response to fluctuating power generation, in the following way: At least either of: a plurality of thresholds each as a charge amount detection threshold relating to the remaining battery level of a charge-side secondary battery; and a plurality of thresholds each as a discharge amount detection threshold relating to the remaining battery level of a discharge-side secondary battery are set, and, each time the remaining battery level of the charge-side secondary battery reaches any of the plurality of thresholds each set as the charge amount detection threshold and each time the remaining battery level of the discharge-side secondary battery reaches any of the plurality of thresholds each set as the discharge amount detection threshold, whether or not to perform switching between the secondary batteries subjected to charging and discharging is determined depending on the remaining battery level of the charge-side secondary battery and the remaining battery level of the discharge-side secondary battery.

A charging device according to the present disclosure comprises: a plurality of secondary batteries that are independently controllable in charging with power generated by energy harvesting and in discharging to supply stored power to an external device; and charge and discharge control unit configured to control, from among the plurality of secondary batteries, a secondary battery as a charge-side secondary battery charged with the power generated by the energy harvesting, and a secondary battery other than the secondary battery as a discharge-side secondary battery discharged to supply stored power to the external device, wherein at least either of: a plurality of thresholds each as a charge amount detection threshold relating to a remaining battery level of the charge-side secondary battery; and a plurality of thresholds each as a discharge amount detection threshold relating to a remaining battery level of the discharge-side secondary battery are set, and each time the remaining battery level of the charge-side secondary battery reaches any of the plurality of thresholds each set as the charge amount detection threshold and each time the remaining battery level of the discharge-side secondary battery reaches any of the plurality of thresholds each set as the discharge amount detection threshold, the charge and discharge control unit determines whether or not to perform switching between secondary batteries subjected to charging and discharging, depending on the remaining battery level of the charge-side secondary battery and the remaining battery level of the discharge-side secondary battery. Thus, the charging target device can be speedily charged while suppressing power wastage, in response to fluctuating power generation.

Moreover, thresholds relating to the remaining battery level of the discharge-side secondary battery are set respectively in association with the plurality of thresholds each set as the charge amount detection threshold, thresholds relating to the remaining battery level of the charge-side secondary battery are set respectively in association with the plurality of thresholds each set as the discharge amount detection threshold, and the charge and discharge control unit: when the remaining battery level of the charge-side secondary battery reaches any of the plurality of thresholds each set as the charge amount detection threshold, determines whether or not to perform the switching, by comparison between a threshold that relates to the remaining battery level of the discharge-side secondary battery and is set in association with the threshold reached and the remaining battery level of the discharge-side secondary battery; and when the remaining battery level of the discharge-side secondary battery reaches any of the plurality of thresholds each set as the discharge amount detection threshold, determines whether or not to perform the switching, by comparison between a threshold that relates to the remaining battery level of the charge-side secondary battery and is set in association with the threshold reached and the remaining battery level of the charge-side secondary battery. Thus, by changing, depending on the remaining battery level of the charge-side (or discharge-side) secondary battery, the threshold relating to the remaining battery level of the discharge-side (or charge-side) secondary battery for determining whether or not to perform switching between the secondary batteries subjected to charging and discharging, the charging target device can be speedily charged while suppressing power wastage.

Moreover, a higher threshold relating to the remaining battery level of the discharge-side secondary battery is associated with a higher threshold set as the charge amount detection threshold, a higher threshold relating to the remaining battery level of the charge-side secondary battery is associated with a higher threshold set as the discharge amount detection threshold, and the charge and discharge control unit: when the remaining battery level of the charge-side secondary battery becomes greater than or equal to a threshold set as the charge amount detection threshold, discharges the charge-side secondary battery and charges the discharge-side secondary battery with the power generated by the energy harvesting, in the case where the remaining battery level of the discharge-side secondary battery is less than a threshold that relates to the discharge-side secondary battery and is associated with the threshold; and when the remaining battery level of the discharge-side secondary battery becomes less than or equal to a threshold set as the discharge amount detection threshold, discharges the charge-side secondary battery and charges the discharge-side secondary battery with the power generated by the energy harvesting, in the case where the remaining battery level of the charge-side secondary battery is greater than a threshold that relates to the charge-side secondary battery and is associated with the threshold. Thus, as the charge-side (or discharge-side) secondary battery approaches the full charge state (or empty state), the threshold relating to the remaining battery level of the discharge-side (or charge-side) secondary battery for determining whether or not to perform switching between the secondary batteries subjected to charging and discharging is increased (or decreased). This makes it possible to avoid a situation in which, as a result of the secondary battery being charged reaching the full charge state, secondary battery charging is stopped and power generated by energy harvesting is wasted, or a situation in which the charging of the device is stopped as a result of the secondary battery being discharged reaching the empty state.

Moreover, in a state where the supply of power to the external device is stopped, when the remaining battery level of the charge-side secondary battery becomes greater than or equal to a minimum threshold of the plurality of thresholds each set as the charge amount detection threshold, the charging device is electrically disconnected from the external device and then reconnected to the external device. Thus, in the case where power supply to the external device is stopped and the charging device is electrically disconnected from the external device, the charging of the external device can be automatically resumed by electrically reconnecting to the external device.

Moreover, each secondary battery is capable of undergoing constant-current charging when charging starts and switching to constant-voltage charging when a battery voltage reaches a predetermined voltage, and a maximum threshold of the plurality of thresholds each set as the charge amount detection threshold is a value equal to or near the remaining battery level of the secondary battery corresponding to the predetermined voltage. Thus, by setting the maximum value of the charge amount detection threshold to a value that is less than or equal to, and near the remaining battery level corresponding to the battery voltage at which the charging of the secondary battery switches from constant-current charging to constant-voltage charging, the secondary battery can be charged close to the full charge state at high speed.

Moreover, a power generation section that generates power by the energy harvesting is removably attachable to the charging device. Thus, the power generation section is removably attachable, so that the portability of the charging device is improved and various power generation sections can be attached to the charging device. This improves the versatility of the charging device.

Moreover, in the case where the supply of power to the external device is stopped as a result of the external device being fully charged, the charge and discharge control unit charges the plurality of secondary batteries one by one until the remaining battery level thereof reaches a predetermined charge stop threshold. Thus, in the case where the external device is fully charged and as a result the charging is stopped, each secondary battery is charged with power generated by energy harvesting until the charge stop threshold is reached. This enables the charging of the external device to be started speedily, next time the external device is to be charged.

Moreover, a plurality of thresholds are each settable as the charge stop threshold, and the charge and discharge control unit sets, as the charge stop threshold, any threshold selected by a user operation from among the plurality of thresholds each settable as the charge stop threshold. Thus, by setting, as the charge stop threshold, any threshold selected by user operation from among the plurality of thresholds settable as the charge stop threshold, each secondary battery can be charged to a level corresponding to the type of the secondary battery while suppressing performance degradation of the secondary battery.

An electronic device according to the present disclosure comprises: a plurality of secondary batteries that are independently controllable in charging with power generated by energy harvesting and in discharging to supply stored power; and charge and discharge control unit configured to control, from among the plurality of secondary batteries, a secondary battery as a charge-side secondary battery charged with the power generated by the energy harvesting, and a secondary battery other than the secondary battery as a discharge-side secondary battery discharged to supply stored power to a load in the electronic device, wherein at least either of: a plurality of thresholds each as a charge amount detection threshold relating to a remaining battery level of the charge-side secondary battery; and a plurality of thresholds each as a discharge amount detection threshold relating to a remaining battery level of the discharge-side secondary battery are set, and each time the remaining battery level of the charge-side secondary battery reaches any of the plurality of thresholds each set as the charge amount detection threshold and each time the remaining battery level of the discharge-side secondary battery reaches any of the plurality of thresholds each set as the discharge amount detection threshold, the charge and discharge control unit determines whether or not to perform switching between secondary batteries subjected to charging and discharging, depending on the remaining battery level of the charge-side secondary battery and the remaining battery level of the discharge-side secondary battery. Thus, the charging target device can be speedily charged while suppressing power wastage, in response to fluctuating power generation.

### (Advantageous Effect)

The charging device and the electronic device according to the present disclosure can speedily charge a charging target device while suppressing power wastage, in response to fluctuating power generation.

### BRIEF DESCRIPTION OF THE DRAWINGS

In the accompanying drawings:
FIG. 1 is a block diagram illustrating the structure of a charging device according to an embodiment of the present disclosure;
FIG. 2 is a flowchart illustrating the operation of the charging device illustrated in FIG. 1;
FIG. 3 is a diagram illustrating charge amount detection thresholds and discharge amount detection thresholds set by a charge and discharge control circuit illustrated in FIG. 1;
FIG. 4 is a diagram illustrating interrupt operation by the charge and discharge control circuit illustrated in FIG. 1;
FIG. 5 is a flowchart illustrating the operation of the charging device illustrated in FIG. 1 when event A occurs;
FIG. 6 is a diagram illustrating the operation of the charging device illustrated in FIG. 1 when event A occurs;
FIG. 7 is a flowchart illustrating the operation of the charging device illustrated in FIG. 1 when event B occurs;
FIG. 8 is a diagram illustrating the operation of the charging device illustrated in FIG. 1 when event B occurs;
FIG. 9 is a flowchart illustrating the operation of the charging device illustrated in FIG. 1 when event C occurs;
FIG. 10 is a diagram illustrating the operation of the charging device illustrated in FIG. 1 when event C occurs;
FIG. 11 is a flowchart illustrating the operation of the charging device illustrated in FIG. 1 when event D occurs;
FIG. 12 is a diagram illustrating the operation of the charging device illustrated in FIG. 1 when event D occurs;
FIG. 13 is a flowchart illustrating the operation of the charging device illustrated in FIG. 1 when event E occurs;
FIG. 14 is a diagram illustrating the operation of the charging device illustrated in FIG. 1 when event E occurs;
FIG. 15 is a flowchart illustrating the operation of the charging device illustrated in FIG. 1 when event F occurs;
FIG. 16 is a diagram illustrating the operation of the charging device illustrated in FIG. 1 when event F occurs;
FIG. 17 is a flowchart illustrating the operation of the charging device illustrated in FIG. 1 when event G occurs;
FIG. 18 is a diagram illustrating the operation of the charging device illustrated in FIG. 1 when event G occurs;
FIG. 19 is a flowchart illustrating the operation of the charging device illustrated in FIG. 1 when event H occurs;
FIG. 20 is a diagram illustrating the operation of the charging device illustrated in FIG. 1 when event H occurs;
FIG. 21 is a diagram illustrating an example of setting thresholds in Comparative Example;
FIG. 22A is a timing chart illustrating operation according to Comparative Example 1;
FIG. 22B is a timing chart illustrating operation according to Comparative Example 1;
FIG. 23A is a timing chart illustrating operation according to Comparative Example 2;
FIG. 23B is a timing chart illustrating operation according to Comparative Example 2;
FIG. 24 is a diagram illustrating an example of setting charge amount detection thresholds and discharge amount detection thresholds according to Example 1 of the charging device illustrated in FIG. 1;
FIG. 25 is a diagram illustrating an example of setting charge amount detection thresholds and discharge amount detection thresholds according to Example 2 of the charging device illustrated in FIG. 1;
FIG. 26A is a timing chart illustrating operation according to Example 1 of the charging device illustrated in FIG. 1;
FIG. 26B is a timing chart illustrating operation according to Example 1 of the charging device illustrated in FIG. 1;
FIG. 27A is a timing chart illustrating operation according to Example 2 of the charging device illustrated in FIG. 1;
FIG. 27B is a timing chart illustrating operation according to Example 2 of the charging device illustrated in FIG. 1;
FIG. 28A is a timing chart illustrating operation according to Example 3 of the charging device illustrated in FIG. 1;
FIG. 28B is a timing chart illustrating operation according to Example 3 of the charging device illustrated in FIG. 1; and
FIG. 29 is a block diagram illustrating an example of the structure of an electronic device according to the present disclosure.

### DETAILED DESCRIPTION

An embodiment of the present disclosure is described below.

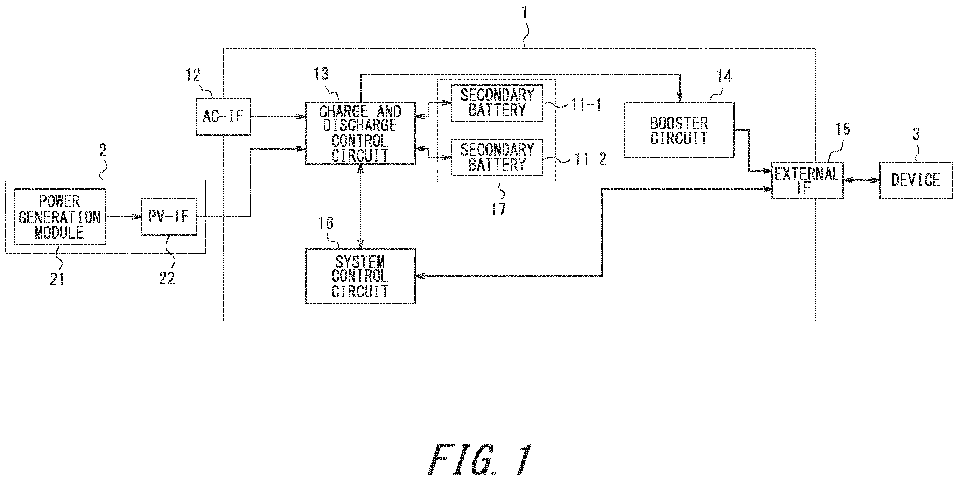

FIG. 1 is a block diagram illustrating the structure of a charging device 1 according to an embodiment of the present disclosure. The charging device 1 according to this embodiment stores power generated by an energy harvesting section 2 (power generation section) for energy harvesting and, when a device 3 (external device) such as a mobile phone or a smartphone is connected, supplies the stored power to the device 3.

The charging device 1 illustrated in FIG. 1 includes secondary batteries 11 (secondary batteries 11-1 and 11-2), an AC (Alternating Current) - IF (Interface) 12, a charge and discharge control circuit (charge and discharge control unit) 13, a booster circuit 14, an external IF 15, and a system control circuit 16.

The secondary batteries 11 are secondary batteries which can be charged and discharged, such as lithium ion batteries. The secondary batteries 11-1 and 11-2 constitute a storage section 17. Although FIG. 1 illustrates an example where the storage section 17 is made up of two secondary batteries 11, the storage section 17 may be made up of three or more secondary batteries 11. Each secondary battery 11 may differ in capacity. The secondary batteries 11 may be removable from the charging device 1.

The AC-IF 12 is connectable to a commercial power supply, and converts AC power supplied from the commercial power supply into DC power and outputs the DC power to the charge and discharge control circuit 13.

The charge and discharge control circuit 13 is supplied with power (DC power) generated by solar power generation, from the energy harvesting section 2 that performs solar power generation. The energy harvesting section 2 includes a power generation module 21 for performing solar power generation, and a PV-IF 22 for connecting the energy harvesting section 2 and the charging device 1. Power generated by the power generation module 21 is fed to the charge and discharge control circuit 13 via the PV-IF 22. As the power generation method by the energy harvesting section 2, various methods of converting nonelectrical energy in the environment into electrical energy are available, including not only solar power generation using sunlight but also wind power generation using wind, vibration power generation using vibration, and radio wave power generation using radio wave. The energy harvesting section 2 may be provided in the charging device 1. The energy harvesting section 2 may be removably attachable to the charging device 1.

The charge and discharge control circuit 13 controls the charging and discharging of each of the secondary batteries 11-1 and 11-2 individually. The charge and discharge control circuit 13 charges one secondary battery 11 from among the plurality of secondary batteries 11 constituting the storage section 17, with power supplied from the energy harvesting section 2 via the PV-IF 22 or power supplied from the commercial power supply via the AC-IF 12. When the device 3 is connected to the charging device 1, the charge and discharge control circuit 13 discharges the secondary battery 11 other than the secondary battery 11 being charged, to supply stored power. In detail, the charge and discharge control circuit 13 sets a path for charging the one secondary battery 11 and discharging the other secondary battery 11, according to control by the system control circuit 16. The power released from the secondary battery 11 is fed to the booster circuit 14.

The charge and discharge control circuit 13 also monitors the remaining battery level of the secondary battery 11 being charged and the remaining battery level of the secondary battery 11 being discharged, and, depending on the remaining battery level of each secondary battery 11, performs operation such as stopping charging the secondary battery 11 being charged, stopping discharging the secondary battery being discharged, or switching between the secondary batteries 11 subjected to charging and discharging. Switching between the secondary batteries 11 subjected to charging and discharging means to start the discharging of the secondary battery 11 being charged and start the charging of the secondary battery 11 being discharged. The storage section 17 may be made up of three or more secondary batteries 11, as mentioned above. In the case where the storage section 17 is made up of three or more secondary batteries 11, one secondary battery 11 is charged, and the other plurality of secondary batteries 11 are discharged. In this case, the charge and discharge control circuit 13 switches charging and discharging between the secondary battery 11 being charged and one of the plurality of secondary batteries 11 being discharged.

The booster circuit 14 increases the voltage output from the secondary battery 11 to a predetermined voltage required for power supply to the device 3, and outputs the increased voltage to the external IF 15.

The external IF 15 is, for example, a universal serial bus (USB) interface, and is an interface for connecting the charging device 1 and the device 3 as the charging target. The power output from the secondary battery 11 is increased by the booster circuit 14, and supplied to the device 3 as the charging target via the external IF 15.

The system control circuit 16 controls the charging and discharging of each secondary battery 11 by the charge and discharge control circuit 13. For example, the system control circuit 16 connects the path of the charge and discharge control circuit 13 to the external IF 15 so that power generated by the energy harvesting section 2 or power stored in the secondary battery 11 other than the secondary battery 11 being charged with power generated by the energy harvesting section 2 is supplied to the device 3 connected to the external IF 15.

The operation of the charging device 1 according to this embodiment is described below.

The overall operation of the charging device 1 is described first.

In the case where power is supplied from the energy harvesting section 2 or from the commercial power supply via the AC-IF 12 and the device 3 is not connected to the external IF 15, the charge and discharge control circuit 13 charges the plurality of secondary batteries 11 one by one to a predetermined remaining battery level (e.g. full charge) with the supplied power. Upon completing the charging of all secondary batteries 11, the charge and discharge control circuit 13 stops the charging.

In the case where power is supplied from the energy harvesting section 2 and also power is supplied from the commercial power supply via the AC-IF 12 and the device 3 is not connected to the external IF 15, the charge and discharge control circuit 13 charges the plurality of secondary batteries 11 one by one to the predetermined remaining battery level (e.g. full charge), preferentially with the power supplied from the commercial power supply via the AC-IF 12.

In the case where power is supplied from the energy harvesting section 2 and also power is supplied from the commercial power supply via the AC-IF 12 and the device 3 is connected to the external IF 15, the charge and discharge control circuit 13 charges the device 3 preferentially with the power supplied from the commercial power supply via the AC-IF 12, and charges the secondary battery 11 with the power supplied from the energy harvesting section 2.

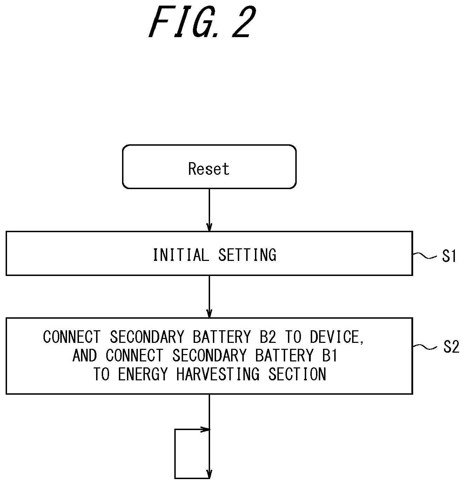

Operation when power is supplied from the energy harvesting section 2 is described in more detail below, with reference to a flowchart in FIG. 2. The secondary batteries 11-1 and 11-2 are hereafter also referred to as secondary batteries B1 and B2 respectively.

When power supply from the energy harvesting section 2 starts, the charge and discharge control circuit 13 sets a path for charging and discharging the secondary batteries 11 by, for example, operating switches constituting the path according to initial setting (step S1). It is assumed here that a path for connecting the secondary battery B2 and the device 3 via the external IF 15 and connecting the secondary battery B1 and the energy harvesting section 2 is set initially.

Hence, the charge and discharge control circuit 13 sets such a path that connects the secondary battery B2 to the device 3 via the external IF 15 and connects the secondary battery B1 to the energy harvesting section 2 (step S2). In this state, the charging device 1 waits for connection of the device 3 to the external IF 15 or power supply from the energy harvesting section 2. The charging device 1 has a function (plug&play function) of automatically supplying power stored in the secondary battery 11 to the device 3 when the device 3 is connected to the external IF 15. Accordingly, when the device 3 is connected to the external IF 15, the output of the secondary battery B2 is increased by the booster circuit 14, and supplied to the device 3 via the external IF 15. Meanwhile, power from the energy harvesting section 2 is fed to the charge and discharge control circuit 13, and the secondary battery B1 is charged.

This initial setting is continued until switching between the secondary batteries 11 subjected to charging and discharging is performed as a result of an interrupt process of determining whether or not to perform switching between the secondary batteries 11 subjected to charging and discharging.

The interrupt process of determining whether or not to perform switching between the secondary batteries 11 subjected to charging and discharging is described below.

The charge and discharge control circuit 13 monitors the remaining battery level of the secondary battery 11 (charge-side secondary battery) being charged with power generated by the energy harvesting section 2 and the remaining battery level of the secondary battery 11 (discharge-side secondary battery) being discharged to supply stored power to the device 3, and performs switching between the secondary batteries 11 subjected to charging and discharging depending on the remaining battery level of each secondary battery 11, as mentioned earlier.

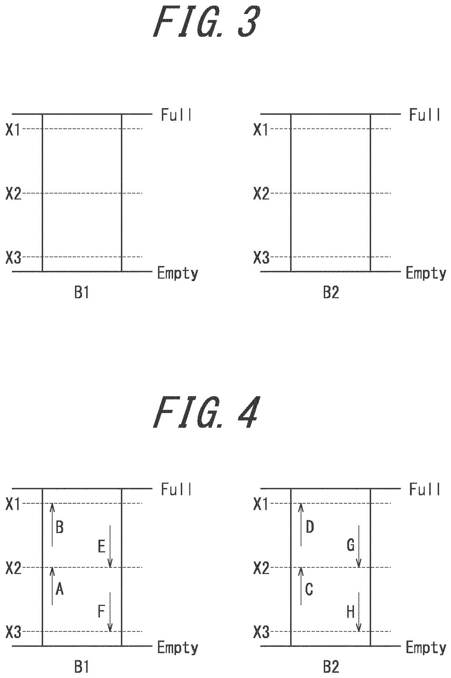

In this embodiment, the charge and discharge control circuit 13 sets three thresholds X1, X2, and X3 (threshold X1 > threshold X2 > threshold X3) for the remaining battery level of each of the secondary batteries B1 and B2, as illustrated in FIG. 3. Threshold X1 is a value that is a predetermined amount less than the remaining battery level in the case where the secondary battery 11 is fully charged (full). For example, in the case where the secondary battery 11 complies with constant-current/constant-voltage charging of performing constant-current charging when charging starts and switching to constant-voltage charging when the battery voltage reaches a predetermined voltage, threshold X1 is a value equal to or near the remaining battery level corresponding to the battery voltage at which the charging of the secondary battery switches from constant-current charging to constant-voltage charging. Threshold X3 is a value that is a predetermined amount greater than the empty state (empty) so as to prevent the secondary battery 11 from being overdischarged. For example, threshold X3 is about 10% to 20% of the total capacity of the secondary battery 11. Threshold X2 is a value that is approximately equal to half of the remaining battery level of the fully charged secondary battery 11.

The charge and discharge control circuit 13 sets two thresholds: thresholds X1 and X2, each as a threshold (hereafter referred to as a charge amount detection threshold) relating to the remaining battery level of the charge-side secondary battery 11 for determining whether or not to perform switching between the secondary batteries 11 subjected to charging and discharging.

In the case where the secondary battery B1 is the charge-side secondary battery, the charge and discharge control circuit 13 starts determination of whether or not to perform switching between the secondary batteries 11 subjected to charging and discharging when the remaining battery level of the secondary battery B1 becomes greater than or equal to threshold X2 (event A) and when the remaining battery level of the secondary battery B1 becomes greater than or equal to threshold X1 (event B), as illustrated in FIG. 4. In the case where the secondary battery B2 is the charge-side secondary battery, the charge and discharge control circuit 13 starts determination of whether or not to perform switching between the secondary batteries 11 subjected to charging and discharging when the remaining battery level of the secondary battery B2 becomes greater than or equal to threshold X2 (event C) and when the remaining battery level of the secondary battery B2 becomes greater than or equal to threshold X1 (event D), as illustrated in FIG. 4.

The charge and discharge control circuit 13 also sets two thresholds: thresholds X2 and X3, each as a threshold (hereafter referred to as a discharge amount detection threshold) relating to the remaining battery level of the discharge-side secondary battery 11 for determining whether or not to perform switching between the secondary batteries 11 subjected to charging and discharging.

In the case where the secondary battery B1 is the discharge-side secondary battery, the charge and discharge control circuit 13 starts determination of whether or not to perform switching between the secondary batteries 11 subjected to charging and discharging when the remaining battery level of the secondary battery B1 becomes less than or equal to threshold X2 (event E) and when the remaining battery level of the secondary battery B1 becomes less than or equal to threshold X3 (event F), as illustrated in FIG. 4. In the case where the secondary battery B2 is the discharge-side secondary battery, the charge and discharge control circuit 13 starts determination of whether or not to perform switching between the secondary batteries 11 subjected to charging and discharging when the remaining battery level of the secondary battery B2 becomes less than or equal to threshold X2 (event G) and when the remaining battery level of the secondary battery B2 becomes less than or equal to threshold X3 (event H), as illustrated in FIG. 4.

The operation of the charging device 1 when each of events A to H occurs is described below.

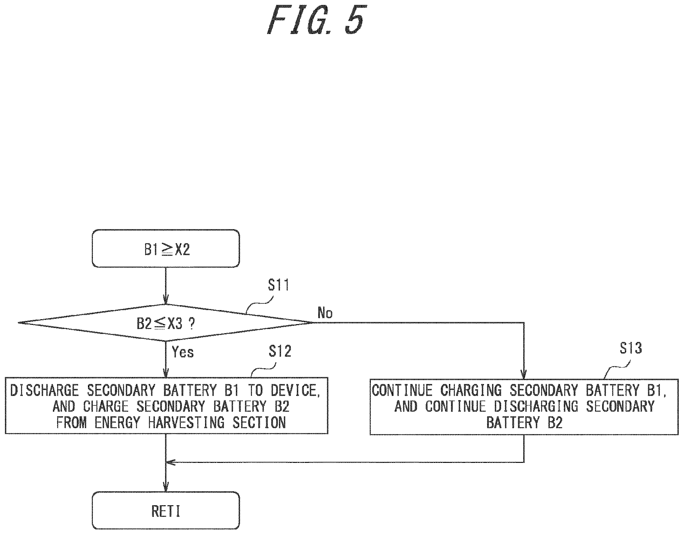

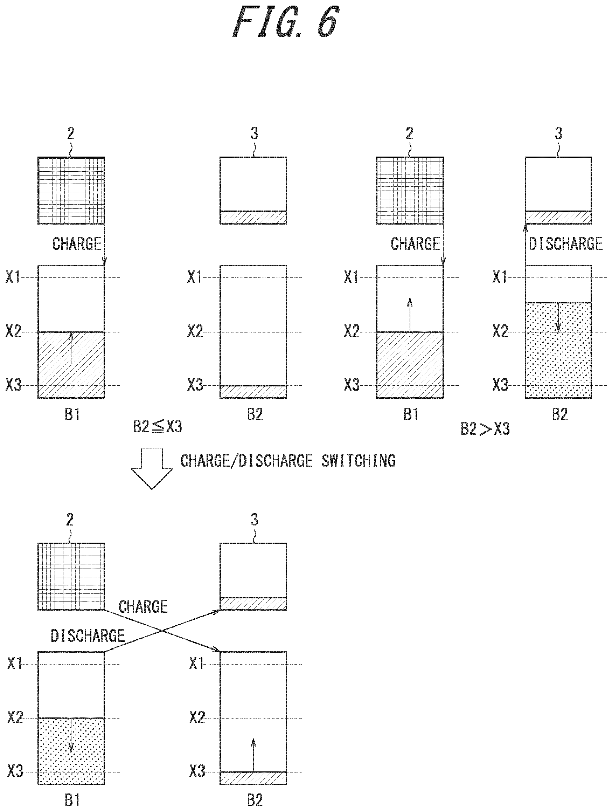

The operation of the charging device 1 in the case where event A occurs (i.e. the secondary battery B1 is the charge-side secondary battery, the secondary battery B2 is the discharge-side secondary battery, and the remaining battery level of the secondary battery B1 becomes greater than or equal to threshold X2) is described below, with reference to FIGS. 5 and 6.

FIG. 5 is a flowchart illustrating the operation of the charging device 1 when event A occurs.

Upon detecting that the remaining battery level of the charge-side secondary battery B1 becomes greater than or equal to threshold X2, the charge and discharge control circuit 13 determines whether or not the remaining battery level of the discharge-side secondary battery B2 is less than or equal to threshold X3 (step S11).

In the case of determining that the remaining battery level of the secondary battery B2 is less than or equal to threshold X3 (step S11: Yes), the charge and discharge control circuit 13 performs switching between the secondary batteries 11 subjected to charging and discharging to discharge the secondary battery B1 which has been the charge-side secondary battery to supply stored power to the device 3 and charge the secondary battery B2 which has been the discharge-side secondary battery with power generated by the energy harvesting section 2, as illustrated in FIG. 6 (step S12).

In the case where the remaining battery level of the discharge-side secondary battery B2 is less than or equal to threshold X3, the secondary battery B2 is nearly empty, so that the charge and discharge control circuit 13 stops discharging the secondary battery B2. Moreover, since the remaining battery level of the charge-side secondary battery B1 is greater than or equal to threshold X2 and a certain amount of power is stored in the secondary battery B1, the charge and discharge control circuit 13 discharges the secondary battery B1. The charging of the device 3 is thus continued, with it being possible to speedily charge the device 3. In addition, since a certain amount of power is stored in the secondary battery B1, a situation in which the secondary battery B1 becomes empty soon after the discharging of the secondary battery B1 starts can be avoided.

In the case of determining that the remaining battery level of the secondary battery B2 is not less than or equal to threshold X3 (i.e. the remaining battery level of the secondary battery B2 is greater than threshold X3) (step S11: No), the charge and discharge control circuit 13 continues charging the charge-side secondary battery B1 and discharging the discharge-side secondary battery B2, as illustrated in FIG. 6 (step S13).

In the case where the remaining battery level of the discharge-side secondary battery B2 is greater than threshold X3, there is still sufficient storage before the secondary battery B2 becomes empty. Hence, by continuing charging the secondary battery B1, needless switching between the secondary batteries 11 subjected to charging and discharging can be prevented.

After the process of step S12 or S13, the charge and discharge control circuit 13 returns from the interrupt process to the normal process (return from interrupt (RETI)).

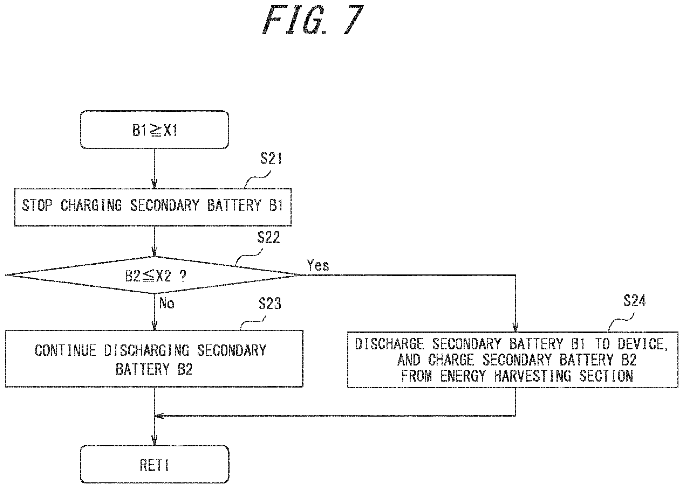

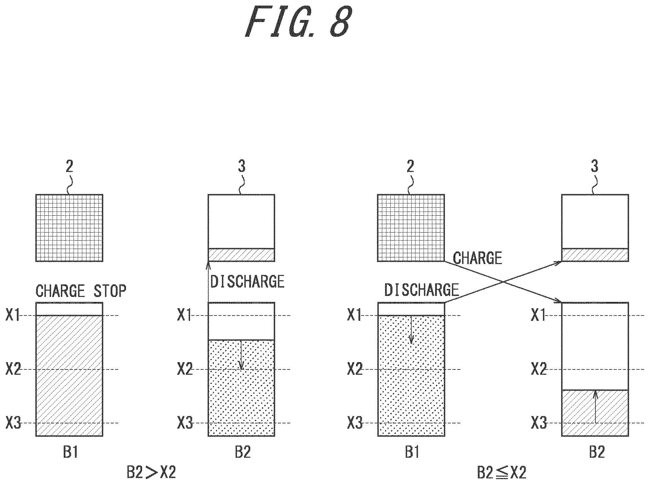

The operation of the charging device 1 in the case where event B occurs (i.e. the secondary battery B1 is the charge-side secondary battery, the secondary battery B2 is the discharge-side secondary battery, and the remaining battery level of the secondary battery B1 becomes greater than or equal to threshold X1) is described below, with reference to FIGS. 7 and 8.

FIG. 7 is a flowchart illustrating the operation of the charging device 1 when event B occurs.

Upon detecting that the remaining battery level of the charge-side secondary battery B1 becomes greater than or equal to threshold X1, the charge and discharge control circuit 13 stops charging the secondary battery B1, because the secondary battery B1 is nearly fully charged (step S21).

The charge and discharge control circuit 13 then determines whether or not the remaining battery level of the discharge-side secondary battery B2 is less than or equal to threshold X2 (step S22).

In the case of determining that the remaining battery level of the secondary battery B2 is not less than or equal to threshold X2 (the remaining battery level of the secondary battery B2 is greater than threshold X2) (step S22: No), the charge and discharge control circuit 13 continues discharging the secondary battery B2, as illustrated in FIG. 8 (step S23).

In the case where the remaining battery level of the discharge-side secondary battery B2 is greater than threshold X2, there is still sufficient storage before the secondary battery B2 becomes empty. Hence, by continuing discharging the secondary battery B2, needless switching between the secondary batteries 11 subjected to charging and discharging can be prevented.

In the case of determining that the remaining battery level of the secondary battery B2 is less than or equal to threshold X2 (step S22: Yes), the charge and discharge control circuit 13 performs switching between the secondary batteries 11 subjected to charging and discharging to discharge the secondary battery B1 which has been the charge-side secondary battery to supply stored power to the device 3 and charge the secondary battery B2 which has been the discharge-side secondary battery with power generated by the energy harvesting section 2, as illustrated in FIG. 8 (step S24).

When the remaining battery level of the charge-side secondary battery B1 becomes greater than or equal to threshold X1, the charging of the secondary battery B1 is stopped. If the discharging of the secondary battery B2 is continued in this state, power generated by the energy harvesting section 2 is not used for charging the secondary battery 11, and wasted. Therefore, switching between the secondary batteries 11 subjected to charging and discharging is performed, despite the remaining battery level of the secondary battery B2 being greater than threshold X3 and there being still sufficient storage before the secondary battery B2 becomes empty. In this way, power wastage can be prevented.

After the process of step S23 or S24, the charge and discharge control circuit 13 returns from the interrupt process to the normal process (RETI).

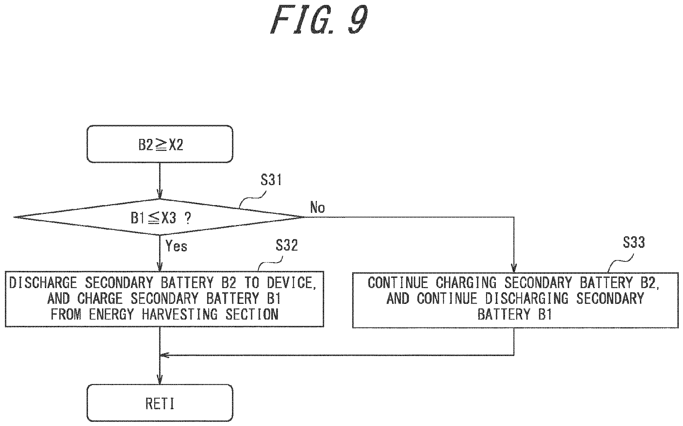

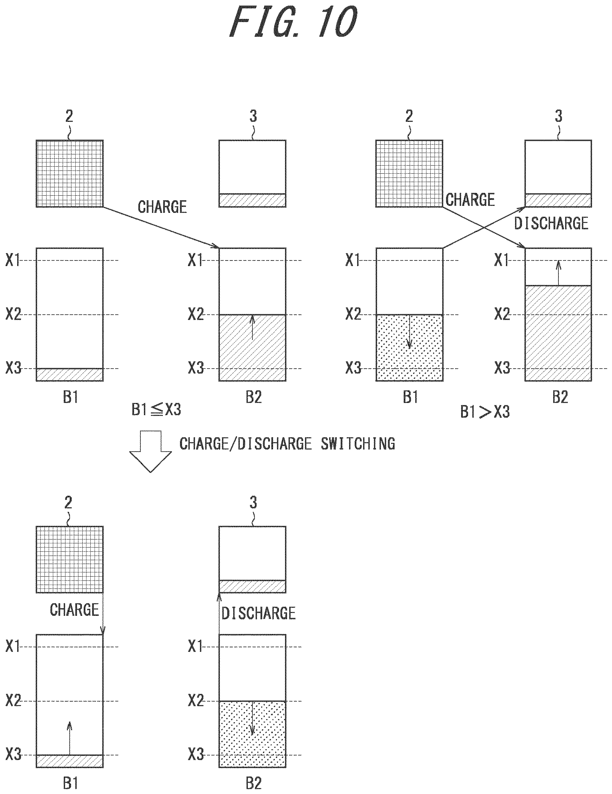

The operation of the charging device 1 in the case where event C occurs (i.e. the secondary battery B1 is the discharge-side secondary battery, the secondary battery B2 is the charge-side secondary battery, and the remaining battery level of the secondary battery B2 becomes greater than or equal to threshold X2) is described below, with reference to FIGS. 9 and 10.

FIG. 9 is a flowchart illustrating the operation of the charging device 1 when event C occurs.

Upon detecting that the remaining battery level of the charge-side secondary battery B2 becomes greater than or equal to threshold X2, the charge and discharge control circuit 13 determines whether or not the remaining battery level of the discharge-side secondary battery B1 is less than or equal to threshold X3 (step S31).

In the case of determining that the remaining battery level of the secondary battery B1 is less than or equal to threshold X3 (step S31: Yes), the charge and discharge control circuit 13 performs switching between the secondary batteries 11 subjected to charging and discharging to charge the secondary battery B1 which has been the discharge-side secondary battery with power generated by the energy harvesting section 2 and discharge the secondary battery B2 which has been the charge-side secondary battery to supply stored power to the device 3, as illustrated in FIG. 10 (step S32).

In the case where the remaining battery level of the discharge-side secondary battery B1 is less than or equal to threshold X3, the secondary battery B1 is nearly empty, so that the charge and discharge control circuit 13 stops discharging the secondary battery B1. Moreover, since the remaining battery level of the charge-side secondary battery B2 is greater than or equal to threshold X2 and a certain amount of power is stored in the secondary battery B2, the charge and discharge control circuit 13 discharges the secondary battery B2. The charging of the device 3 is thus continued, with it being possible to speedily charge the device 3. In addition, since a certain amount of power is stored in the secondary battery B2, a situation in which the secondary battery B2 becomes empty soon after the discharging of the secondary battery B2 starts can be avoided.

In the case of determining that the remaining battery level of the secondary battery B1 is not less than or equal to threshold X3 (i.e. the remaining battery level of the secondary battery B1 is greater than threshold X3) (step S31: No), the charge and discharge control circuit 13 continues discharging the discharge-side secondary battery B1 and charging the charge-side secondary battery B2, as illustrated in FIG. 10 (step S33).

In the case where the remaining battery level of the discharge-side secondary battery B1 is greater than threshold X3, there is still sufficient storage before the secondary battery B1 becomes empty. Hence, by continuing charging the secondary battery B2, needless switching between the secondary batteries 11 subjected to charging and discharging can be prevented.

After the process of step S32 or S33, the charge and discharge control circuit 13 returns from the interrupt process to the normal process (RETI).

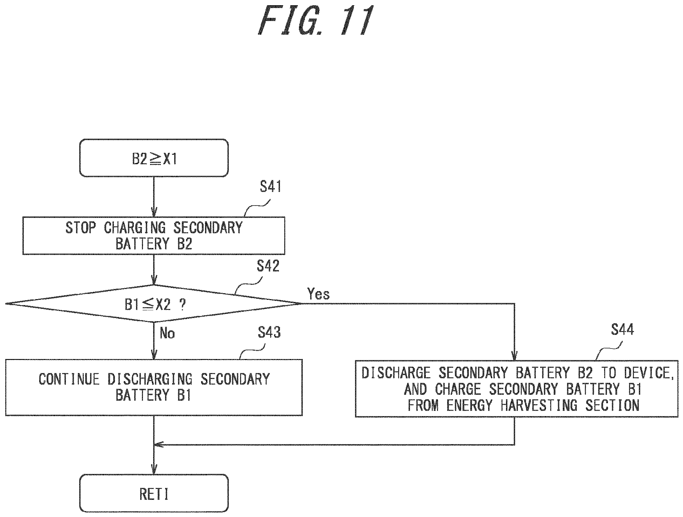

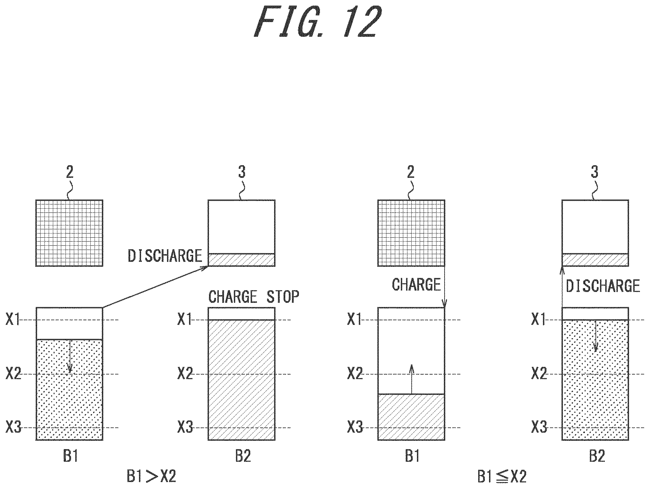

The operation of the charging device 1 in the case where event D occurs (i.e. the secondary battery B1 is the discharge-side secondary battery, the secondary battery B2 is the charge-side secondary battery, and the remaining battery level of the secondary battery B2 becomes greater than or equal to threshold X1) is described below, with reference to FIGS. 11 and 12.

FIG. 11 is a flowchart illustrating the operation of the charging device 1 when event D occurs.

Upon detecting that the remaining battery level of the charge-side secondary battery B2 becomes greater than or equal to threshold X1, the charge and discharge control circuit 13 stops charging the secondary battery B2, because the secondary battery B2 is nearly fully charged (step S41).

The charge and discharge control circuit 13 then determines whether or not the remaining battery level of the discharge-side secondary battery B1 is less than or equal to threshold X2 (step S42).

In the case of determining that the remaining battery level of the secondary battery B1 is not less than or equal to threshold X2 (the remaining battery level of the secondary battery B1 is greater than threshold X2) (step S42: No), the charge and discharge control circuit 13 continues discharging the secondary battery B1, as illustrated in FIG. 12 (step S43).

In the case where the remaining battery level of the discharge-side secondary battery B1 is greater than threshold X2, there is still sufficient storage before the secondary battery B1 becomes empty. Hence, by continuing discharging the secondary battery B1, needless switching between the secondary batteries 11 subjected to charging and discharging can be prevented.

In the case of determining that the remaining battery level of the secondary battery B1 is less than or equal to threshold X2 (step S42: Yes), the charge and discharge control circuit 13 performs switching between the secondary batteries 11 subjected to charging and discharging to discharge the secondary battery B2 which has been the charge-side secondary battery to supply stored power to the device 3 and charge the secondary battery B1 which has been the discharge-side secondary battery with power generated by the energy harvesting section 2, as illustrated in FIG. 12 (step S44).

When the remaining battery level of the charge-side secondary battery B2 becomes greater than or equal to threshold X1, the charging of the secondary battery B2 is stopped. If the discharging of the secondary battery B1 is continued in this state, power generated by the energy harvesting section 2 is not used for charging the secondary battery 11, and wasted. Therefore, switching between the secondary batteries 11 subjected to charging and discharging is performed, despite the remaining battery level of the secondary battery B1 being greater than threshold X3 and there being still sufficient storage before the secondary battery B1 becomes empty. In this way, power wastage can be prevented.

After the process of step S43 or S44, the charge and discharge control circuit 13 returns from the interrupt process to the normal process (RETI).

Thus, the charge and discharge control circuit 13 sets two thresholds: thresholds X1 and X2, each as the charge amount detection threshold. In the case where the remaining battery level of the charge-side secondary battery 11 is greater than or equal to threshold X1, the charge and discharge control circuit 13 stops charging the charge-side secondary battery 11.

The charge and discharge control circuit 13 also sets thresholds X2 and X3 relating to the remaining battery level of the discharge-side secondary battery 11, respectively in association with thresholds X1 and X2 each set as the charge amount detection threshold. Each time the remaining battery level of the charge-side secondary battery 11 reaches threshold X1 or X2 set as the charge amount detection threshold (the remaining battery level of the charge-side secondary battery 11 becomes greater than or equal to threshold X1 or X2), the charge and discharge control circuit 13 determines whether or not to perform switching between the secondary batteries 11 subjected to charging and discharging, by comparison between the threshold that relates to the remaining battery level of the discharge-side secondary battery 11 and is set in association with the threshold reached and the remaining battery level of the discharge-side secondary battery 11.

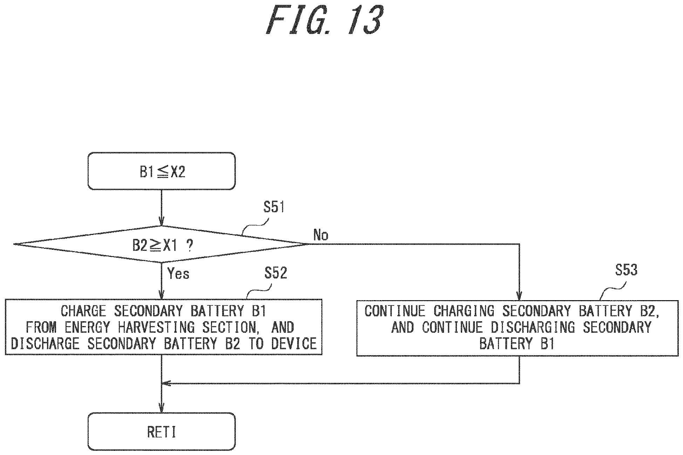

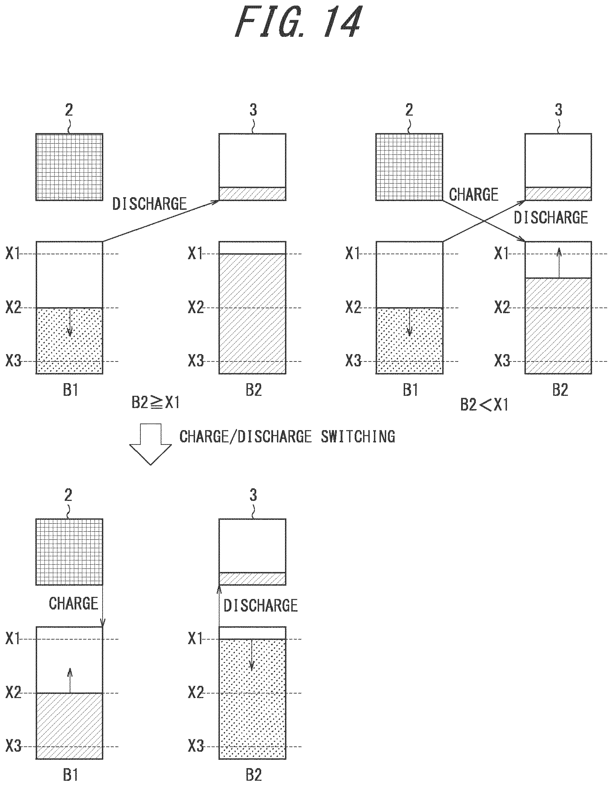

The operation of the charging device 1 in the case where event E occurs (i.e. the secondary battery B1 is the discharge-side secondary battery, the secondary battery B2 is the charge-side secondary battery, and the remaining battery level of the secondary battery B1 becomes less than or equal to threshold X2) is described below, with reference to FIGS. 13 and 14.

FIG. 13 is a flowchart illustrating the operation of the charging device 1 when event E occurs.

Upon detecting that the remaining battery level of the discharge-side secondary battery B1 becomes less than or equal to threshold X2, the charge and discharge control circuit 13 determines whether or not the remaining battery level of the charge-side secondary battery B2 is greater than or equal to threshold X1 (step S51).

In the case of determining that the remaining battery level of the secondary battery B2 is greater than or equal to threshold X1 (step S51: Yes), the charge and discharge control circuit 13 performs switching between the secondary batteries 11 subjected to charging and discharging to discharge the secondary battery B2 which has been the charge-side secondary battery to supply stored power to the device 3 and charge the secondary battery B1 which has been the discharge-side secondary battery with power generated by the energy harvesting section 2, as illustrated in FIG. 14 (step S52).

When the remaining battery level of the charge-side secondary battery B2 becomes greater than or equal to threshold X1, the charging of the secondary battery B2 is stopped. If the discharging of the secondary battery B1 is continued in this state, power generated by the energy harvesting section 2 is not used for charging the secondary battery 11, and wasted. Therefore, switching between the secondary batteries 11 subjected to charging and discharging is performed, despite the remaining battery level of the secondary battery B1 being greater than threshold X3 and there being still sufficient storage before the secondary battery B1 becomes empty. In this way, power wastage can be prevented.

In the case of determining that the remaining battery level of the secondary battery B2 is not greater than or equal to threshold X1 (the remaining battery level of the secondary battery B2 is less than threshold X1) (step S51: No), the charge and discharge control circuit 13 continues charging the charge-side secondary battery B2 and discharging the discharge-side secondary battery B1, as illustrated in FIG. 14 (step S53).

In the case where the remaining battery level of the charge-side secondary battery B2 is less than threshold X1, there is still sufficient space before the secondary battery B2 becomes nearly full. Moreover, the remaining battery level of the discharge-side secondary battery B1 is greater than threshold X3, and there is still sufficient storage before the secondary battery B1 becomes nearly empty. Hence, by continuing charging the secondary battery B2, needless switching between the secondary batteries 11 subjected to charging and discharging can be prevented.

After the process of step S52 or S53, the charge and discharge control circuit 13 returns from the interrupt process to the normal process (RETI).

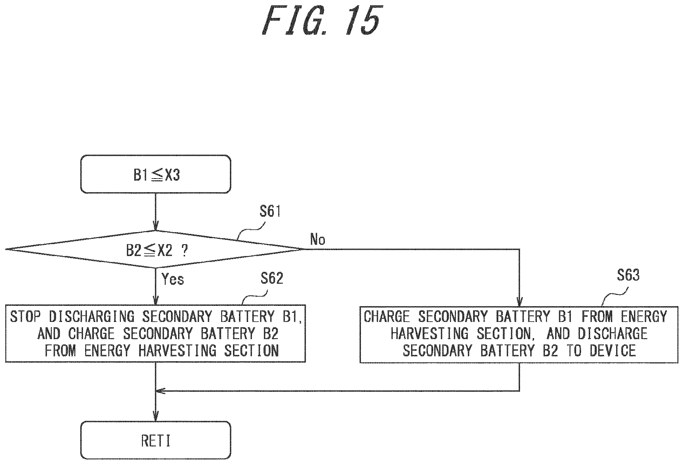

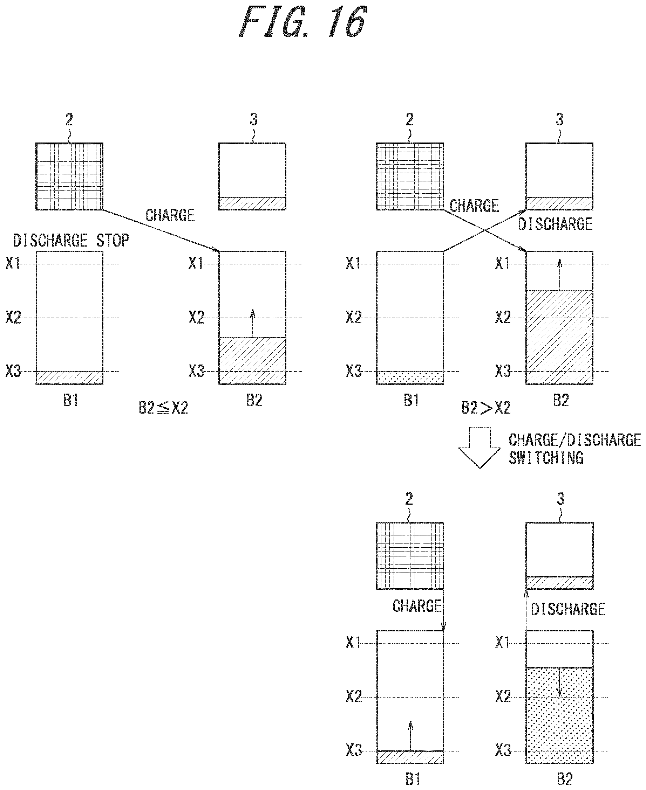

The operation of the charging device 1 in the case where event F occurs (i.e. the secondary battery B1 is the discharge-side secondary battery, the secondary battery B2 is the charge-side secondary battery, and the remaining battery level of the secondary battery B1 becomes less than or equal to threshold X3) is described below, with reference to FIGS. 15 and 16.

FIG. 15 is a flowchart illustrating the operation of the charging device 1 when event F occurs.

Upon detecting that the remaining battery level of the discharge-side secondary battery B1 becomes less than or equal to threshold X3, the charge and discharge control circuit 13 determines whether or not the remaining battery level of the charge-side secondary battery B2 is less than or equal to threshold X2 (step S61).

In the case of determining that the remaining battery level of the secondary battery B2 is less than or equal to threshold X2 (step S61: Yes), the charge and discharge control circuit 13 stops discharging the secondary battery B1 and continues charging the secondary battery B2, as illustrated in FIG. 16 (step S62).

In the case where the remaining battery level of the discharge-side secondary battery B1 is less than or equal to threshold X3, the secondary battery B1 is nearly empty, so that the charge and discharge control circuit 13 stops discharging the secondary battery B1 to the device 3. Moreover, since the remaining battery level of the secondary battery B2 is less than or equal to threshold X2 and the secondary battery B2 is not sufficiently charged, the charge and discharge control circuit 13 continues charging the secondary battery B2. Thus, although the charging of the device 3 is temporarily stopped, the secondary battery B2 can be sufficiently charged before being discharged to the device 3. This prevents frequent switching between the secondary batteries 11 subjected to charging and discharging.

In the case of determining that the remaining battery level of the secondary battery B2 is not less than or equal to threshold X2 (the remaining battery level of the secondary battery B2 is greater than threshold X2) (step S61: No), the charge and discharge control circuit 13 performs switching between the secondary batteries 11 subjected to charging and discharging to discharge the secondary battery B2 which has been the charge-side secondary battery to supply stored power to the device 3 and charge the secondary battery B1 which has been the discharge-side secondary battery with power generated by the energy harvesting section 2, as illustrated in FIG. 16 (step S63).

In the case where the remaining battery level of the discharge-side secondary battery B1 is less than or equal to threshold X3, the secondary battery B1 is nearly empty, so that the charge and discharge control circuit 13 stops discharging the secondary battery B1. Moreover, since the remaining battery level of the charge-side secondary battery B2 is greater than or equal to threshold X2 and a certain amount of power is stored in the secondary battery B2, the charge and discharge control circuit 13 discharges the secondary battery B2. The charging of the device 3 is thus continued, with it being possible to speedily charge the device 3. In addition, since a certain amount of power is stored in the secondary battery B2, a situation in which the secondary battery B2 becomes empty soon after the discharging of the secondary battery B2 starts can be avoided.

After the process of step S62 or S63, the charge and discharge control circuit 13 returns from the interrupt process to the normal process (RETI).

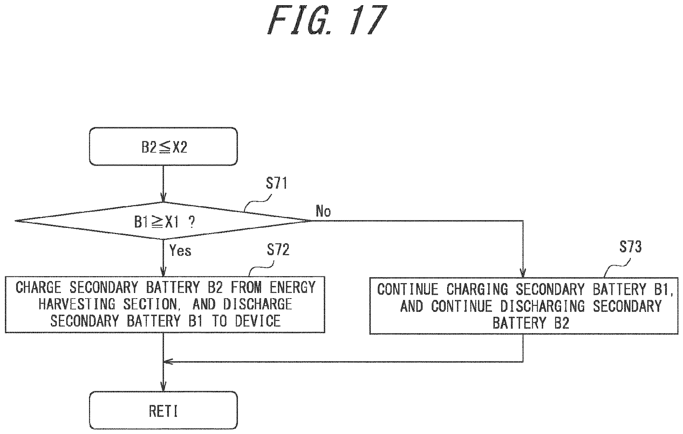

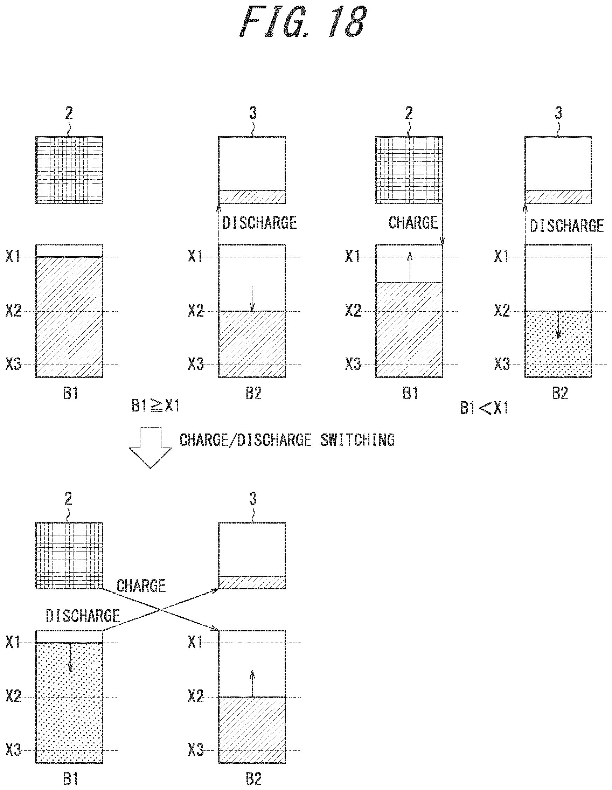

The operation of the charging device 1 in the case where event G occurs (i.e. the secondary battery B1 is the charge-side secondary battery, the secondary battery B2 is the discharge-side secondary battery, and the remaining battery level of the secondary battery B2 becomes less than or equal to threshold X2) is described below, with reference to FIGS. 17 and 18.

FIG. 17 is a flowchart illustrating the operation of the charging device 1 when event G occurs.

Upon detecting that the remaining battery level of the discharge-side secondary battery B2 becomes less than or equal to threshold X2, the charge and discharge control circuit 13 determines whether or not the remaining battery level of the charge-side secondary battery B1 is greater than or equal to threshold X1 (step S71).

In the case of determining that the remaining battery level of the secondary battery B1 is greater than or equal to threshold X1 (step S71: Yes), the charge and discharge control circuit 13 performs switching between the secondary batteries 11 subjected to charging and discharging to discharge the secondary battery B1 which has been the charge-side secondary battery to supply stored power to the device 3 and charge the secondary battery B2 which has been the discharge-side secondary battery with power generated by the energy harvesting section 2, as illustrated in FIG. 18 (step S72).

When the remaining battery level of the charge-side secondary battery B1 becomes greater than or equal to threshold X1, the charging of the secondary battery B1 is stopped. If the discharging of the secondary battery B2 is continued in this state, power generated by the energy harvesting section 2 is not used for charging the secondary battery 11, and wasted. Therefore, switching between the secondary batteries 11 subjected to charging and discharging is performed, despite the remaining battery level of the secondary battery B2 being greater than threshold X3 and there being still sufficient storage before the secondary battery B2 becomes empty. In this way, power wastage can be prevented.

In the case of determining that the remaining battery level of the secondary battery B1 is not greater than or equal to threshold X1 (the remaining battery level of the secondary battery B1 is less than threshold X1) (step S71: No), the charge and discharge control circuit 13 continues charging the charge-side secondary battery B1 and discharging the discharge-side secondary battery B2, as illustrated in FIG. 18 (step S73).

In the case where the remaining battery level of the charge-side secondary battery B1 is less than threshold X1, there is still sufficient space before the secondary battery B1 becomes nearly full. Moreover, the remaining battery level of the discharge-side secondary battery B2 is greater than threshold X3, and there is still sufficient storage before the secondary battery B2 becomes nearly empty. Hence, by continuing charging the secondary battery B1, needless switching between the secondary batteries 11 subjected to charging and discharging can be prevented.

After the process of step S72 or S73, the charge and discharge control circuit 13 returns from the interrupt process to the normal process (RETI).

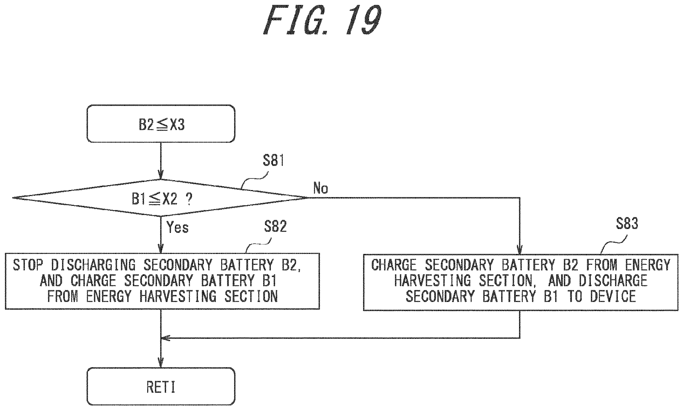

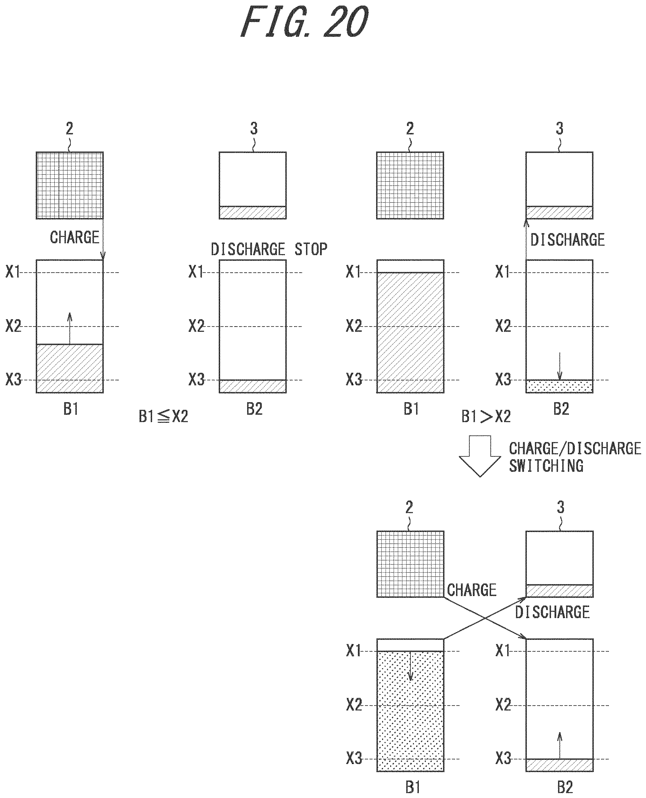

The operation of the charging device 1 in the case where event H occurs (i.e. the secondary battery B1 is the charge-side secondary battery, the secondary battery B2 is the discharge-side secondary battery, and the remaining battery level of the secondary battery B2 becomes less than or equal to threshold X3) is described below, with reference to FIGS. 19 and 20.

FIG. 19 is a flowchart illustrating the operation of the charging device 1 when event H occurs.

Upon detecting that the remaining battery level of the discharge-side secondary battery B2 becomes less than or equal to threshold X3, the charge and discharge control circuit 13 determines whether or not the remaining battery level of the charge-side secondary battery B1 is less than or equal to threshold X2 (step S81).

In the case of determining that the remaining battery level of the secondary battery B1 is less than or equal to threshold X2 (step S81: Yes), the charge and discharge control circuit 13 stops discharging the secondary battery B2 and continues charging the secondary battery B1, as illustrated in FIG. 20 (step S82).

In the case where the remaining battery level of the discharge-side secondary battery B2 is less than or equal to threshold X3, the secondary battery B2 is nearly empty, so that the charge and discharge control circuit 13 stops discharging the secondary battery B2 to the device 3. Moreover, since the remaining battery level of the secondary battery B1 is less than or equal to threshold X2 and the secondary battery B1 is not sufficiently charged, the charge and discharge control circuit 13 continues charging the secondary battery B1. Thus, although the charging of the device 3 is temporarily stopped, the secondary battery B1 can be sufficiently charged before being discharged to the device 3. This prevents frequent switching between the secondary batteries 11 subjected to charging and discharging.

In the case of determining that the remaining battery level of the secondary battery B1 is not less than or equal to threshold X2 (the remaining battery level of the secondary battery B1 is greater than threshold X2) (step S81: No), the charge and discharge control circuit 13 performs switching between the secondary batteries 11 subjected to charging and discharging to discharge the secondary battery B1 which has been the charge-side secondary battery to supply stored power to the device 3 and charge the secondary battery B2 which has been the discharge-side secondary battery with power generated by the energy harvesting section 2, as illustrated in FIG. 20 (step S83).

In the case where the remaining battery level of the discharge-side secondary battery B2 is less than or equal to threshold X3, the secondary battery B2 is nearly empty, so that the charge and discharge control circuit 13 stops discharging the secondary battery B2. Moreover, since the remaining battery level of the charge-side secondary battery B1 is greater than or equal to threshold X2 and a certain amount of power is stored in the secondary battery B1, the charge and discharge control circuit 13 discharges the secondary battery B1. The charging of the device 3 is thus continued, with it being possible to speedily charge the device 3. In addition, since a certain amount of power is stored in the secondary battery B1, a situation in which the secondary battery B1 becomes empty soon after the discharging of the secondary battery B1 starts can be avoided.

After the process of step S82 or S83, the charge and discharge control circuit 13 returns from the interrupt process to the normal process (RETI).

Thus, the charge and discharge control circuit 13 sets two thresholds: thresholds X2 and X3, each as the discharge amount detection threshold. In the case where the remaining battery level of the discharge-side secondary battery 11 is less than or equal to threshold X3, the charge and discharge control circuit 13 stops discharging the discharge-side secondary battery 11.

The charge and discharge control circuit 13 also sets thresholds X1 and X2 relating to the remaining battery level of the charge-side secondary battery 11, respectively in association with thresholds X2 and X3 each set as the discharge amount detection threshold. Each time the remaining battery level of the discharge-side secondary battery 11 reaches threshold X2 or X3 set as the discharge amount detection threshold (the remaining battery level of the discharge-side secondary battery 11 becomes less than or equal to threshold X2 or X3), the charge and discharge control circuit 13 determines whether or not to perform switching between the secondary batteries 11 subjected to charging and discharging, by comparison between the threshold that relates to the remaining battery level of the charge-side secondary battery 11 and is set in association with the threshold reached and the remaining battery level of the charge-side secondary battery 11.

The operation of the charging device 1 is described below, with reference to timing charts.

In this embodiment, a plurality of thresholds are set each as the charge amount detection threshold and a plurality of thresholds are set each as the discharge amount detection threshold, as mentioned above. Each time the remaining battery level of the charge-side secondary battery 11 becomes greater than or equal to any threshold set as the charge amount detection threshold, whether or not to perform switching between the secondary batteries 11 subjected to charging and discharging is determined. Each time the remaining battery level of the discharge-side secondary battery 11 becomes less than or equal to any threshold set as the discharge amount detection threshold, whether or not to perform switching between the secondary batteries 11 subjected to charging and discharging is determined.

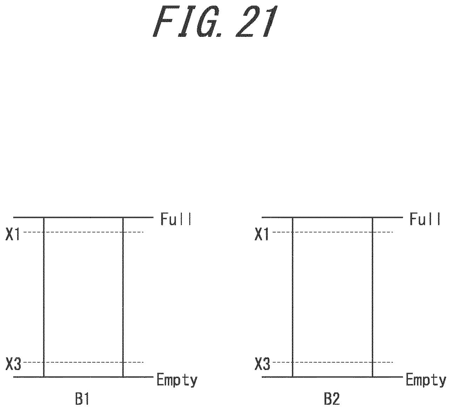

For comparison, an example where only one threshold is set as the charge amount detection threshold and only one threshold is set as the discharge amount detection threshold is described below. In detail, the case where threshold X1 is set as the charge amount detection threshold and threshold X3 is set as the discharge amount detection threshold as illustrated in FIG. 21 is described below, as a comparative example.

In the case where one threshold is set as the charge amount detection threshold and one threshold is set as the discharge amount detection threshold, the following two operations are possible: operation of performing switching between the secondary batteries 11 subjected to charging and discharging in the case where the remaining battery level of the charge-side secondary battery 11 is greater than or equal to threshold X1 and the remaining battery level of the discharge-side secondary battery 11 is less than or equal to threshold X3; and operation of performing switching between the secondary batteries 11 subjected to charging and discharging in the case where the remaining battery level of the charge-side secondary battery 11 is greater than or equal to threshold X1 or the remaining battery level of the discharge-side secondary battery 11 is less than or equal to threshold X3. Hereafter, the former operation is referred to as Comparative Example 1, and the latter operation example as Comparative Example 2.

Operation according to Comparative Example 1 is described below.

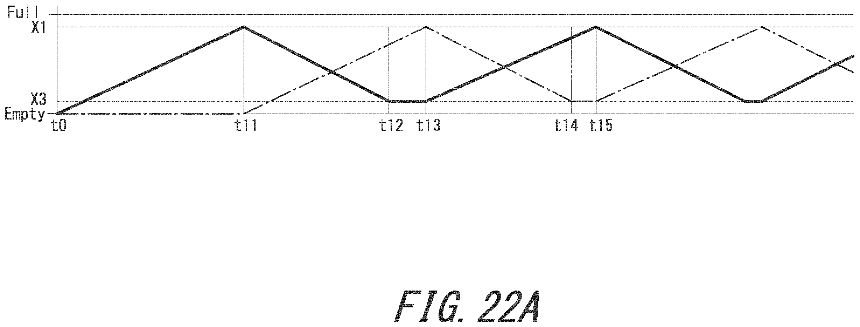

FIG. 22A is a timing chart illustrating operation according to Comparative Example 1 of the charging device 1 in the case where the discharge rate of the discharge-side secondary battery 11 is higher than the charge rate of the charge-side secondary battery 11. In the timing chart, a solid line represents the remaining battery level of the secondary battery B1, and a dashed-dotted line represents the remaining battery level of the secondary battery B2. It is assumed here that the secondary batteries B1 and B2 are both empty in the initial state, and that the discharge rate and the charge rate are unchanged.

In the initial state (time t0), the secondary battery B1 is set as the charge-side secondary battery, and the secondary battery B2 is set as the discharge-side secondary battery. According to this setting, the secondary battery B1 is charged with power generated by the energy harvesting section 2, and the remaining battery level of the secondary battery B1 increases. Since the remaining battery level of the secondary battery B2 is less than or equal to threshold X3, the secondary battery B2 is not discharged, and the remaining battery level of the secondary battery B2 remains at 0. The operation at time t0 is the same in the below-mentioned Comparative Examples and Examples, and so its description is omitted hereafter.

At time t11, the remaining battery level of the charge-side secondary battery B1 becomes greater than or equal to threshold X1. At time t11, the remaining battery level of the charge-side secondary battery B1 is greater than or equal to threshold X1, and the remaining battery level of the discharge-side secondary battery B2 is less than or equal to threshold X3. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

At time t12, the remaining battery level of the discharge-side secondary battery B1 becomes less than or equal to threshold X3. Meanwhile, at time t12, the remaining battery level of the charge-side secondary battery B2 is less than threshold X1.

When the remaining battery level of the secondary battery B1 becomes less than or equal to threshold X3 at time t12, the charge and discharge control circuit 13 stops discharging the secondary battery B1. As a result, the remaining battery level of the secondary battery B1 is kept constant at a value less than or equal to threshold X3. Since the remaining battery level of the secondary battery B2 is not greater than or equal to threshold X1 at time t12, the charge and discharge control circuit 13 does not perform switching between the secondary batteries 11 subjected to charging and discharging. The charging of the secondary battery B2 is thus continued.

At time t13, the remaining battery level of the charge-side secondary battery B2 becomes greater than or equal to threshold X1. At time t13, the remaining battery level of the charge-side secondary battery B2 is greater than or equal to threshold X1, and the remaining battery level of the discharge-side secondary battery B1 is less than or equal to threshold X3. The charge and discharge control circuit 13 accordingly determines to perform switching between the secondary batteries 11 subjected to charging and discharging. According to this determination, the charge and discharge control circuit 13 sets the secondary battery B1 as the charge-side secondary battery, and the secondary battery B2 as the discharge-side secondary battery. As a result, the remaining battery level of the secondary battery B1 increases, and the remaining battery level of the secondary battery B2 decreases.

At time t14, the remaining battery level of the discharge-side secondary battery B2 becomes less than or equal to threshold X3. Meanwhile, at time t14, the remaining battery level of the charge-side secondary battery B1 is less than threshold X1.

When the remaining battery level of the secondary battery B2 becomes less than or equal to threshold X3 at time t14, the charge and discharge control circuit 13 stops discharging the secondary battery B2. As a result, the remaining battery level of the secondary battery B2 is kept constant at a value less than or equal to threshold X3. Since the remaining battery level of the secondary battery B1 is not greater than or equal to threshold X1 at time t14, the charge and discharge control circuit 13 does not perform switching between the secondary batteries 11 subjected to charging and discharging. The charging of the secondary battery B1 is thus continued.

At time t15, the remaining battery level of the charge-side secondary battery B1 becomes greater than or equal to threshold X1. At time t15, the remaining battery level of the charge-side secondary battery B1 is greater than or equal to threshold X1, and the remaining battery level of the discharge-side secondary battery B2 is less than or equal to threshold X3. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

Subsequently, switching between the secondary batteries 11 subjected to charging and discharging is performed each time the remaining battery level of the charge-side secondary battery 11 is greater than or equal to threshold X1 and the remaining battery level of the discharge-side secondary battery 11 is less than or equal to threshold X3, in the same manner.

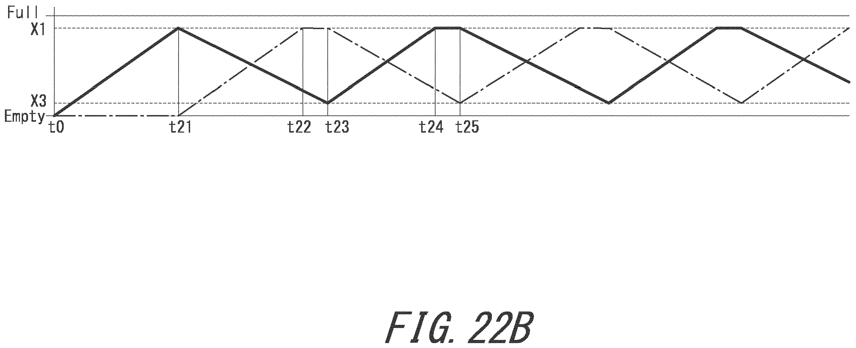

FIG. 22B is a timing chart illustrating operation according to Comparative Example 1 of the charging device 1 in the case where the charge rate of the charge-side secondary battery 11 is higher than the discharge rate of the discharge-side secondary battery 11.

At time t21, the remaining battery level of the charge-side secondary battery B1 becomes greater than or equal to threshold X1. At time t21, the remaining battery level of the charge-side secondary battery B1 is greater than or equal to threshold X1, and the remaining battery level of the discharge-side secondary battery B2 is less than or equal to threshold X3. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

At time t22, the remaining battery level of the charge-side secondary battery B2 becomes greater than or equal to threshold X1. Meanwhile, at time t22, the remaining battery level of the discharge-side secondary battery B1 is greater than threshold X3.

When the remaining battery level of the charge-side secondary battery B2 becomes greater than or equal to threshold X1 at time t22, the charge and discharge control circuit 13 stops charging the secondary battery B2. As a result, the remaining battery level of the secondary battery B2 is kept constant at a value greater than or equal to threshold X1. Since the remaining battery level of the discharge-side secondary battery B1 is not less than or equal to threshold X3 at time t22, the charge and discharge control circuit 13 does not perform switching between the secondary batteries 11 subjected to charging and discharging. The discharging of the secondary battery B1 is thus continued.

At time t23, the remaining battery level of the discharge-side secondary battery B1 becomes less than or equal to threshold X3. At time t23, the remaining battery level of the charge-side secondary battery B2 is greater than or equal to threshold X1, and the remaining battery level of the discharge-side secondary battery B1 is less than or equal to threshold X3. The charge and discharge control circuit 13 accordingly determines to perform switching between the secondary batteries 11 subjected to charging and discharging. According to this determination, the charge and discharge control circuit 13 sets the secondary battery B1 as the charge-side secondary battery, and the secondary battery B2 as the discharge-side secondary battery. As a result, the remaining battery level of the secondary battery B1 increases, and the remaining battery level of the secondary battery B2 decreases.

At time t24, the remaining battery level of the charge-side secondary battery B1 becomes greater than or equal to threshold X1. Meanwhile, at time t24, the remaining battery level of the discharge-side secondary battery B2 is greater than threshold X3.

When the remaining battery level of the secondary battery B1 becomes greater than or equal to threshold X1 at time t24, the charge and discharge control circuit 13 stops charging the secondary battery B1. As a result, the remaining battery level of the secondary battery B1 is kept constant at a value greater than or equal to threshold X1. Since the remaining battery level of the secondary battery B2 is not less than or equal to threshold X3 at time t24, the charge and discharge control circuit 13 does not perform switching between the secondary batteries 11 subjected to charging and discharging. The discharging of the secondary battery B2 is thus continued.

At time t25, the remaining battery level of the discharge-side secondary battery B2 becomes less than or equal to threshold X3. At time t25, the remaining battery level of the charge-side secondary battery B1 is greater than or equal to threshold X1, and the remaining battery level of the discharge-side secondary battery B2 is less than or equal to threshold X3. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

Subsequently, switching between the secondary batteries 11 subjected to charging and discharging is performed each time the remaining battery level of the charge-side secondary battery 11 is greater than or equal to threshold X1 and the remaining battery level of the discharge-side secondary battery 11 is less than or equal to threshold X3, in the same manner.

In Comparative Example 1 illustrated in FIGS. 22A and 22B, the discharging to the device 3 is not performed until the remaining battery level of any of the secondary batteries 11 becomes greater than or equal to threshold X1 from the initial state, and so it takes time to charge the device 3. Besides, the period during which the discharging to the device 3 is stopped or the period during which the charging of the secondary battery 11 from the energy harvesting section 2 is stopped increases. This makes it difficult to speedily charge the device 3, and causes wastage of power generated by the energy harvesting section 2.

Operation according to Comparative Example 2 of the charging device 1 is described below.

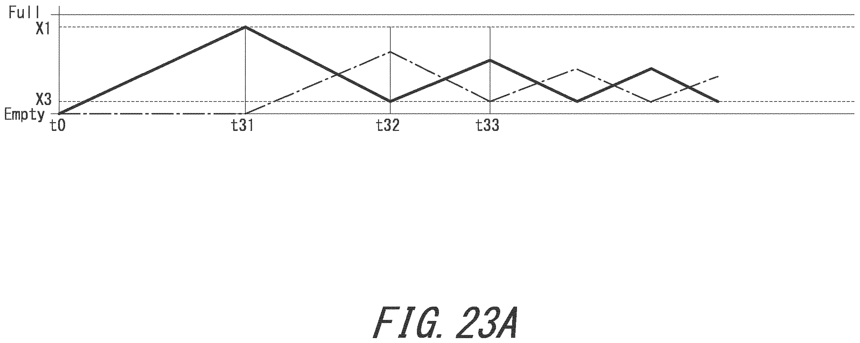

FIG. 23A is a timing chart illustrating operation according to Comparative Example 2 of the charging device 1 in the case where the discharge rate of the discharge-side secondary battery 11 is higher than the charge rate of the charge-side secondary battery 11.

At time t31, the remaining battery level of the charge-side secondary battery B1 becomes greater than or equal to threshold X1. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

At time t32, the remaining battery level of the discharge-side secondary battery B1 becomes less than or equal to threshold X3. Meanwhile, at time t32, the remaining battery level of the charge-side secondary battery B2 is less than threshold X1.

When the remaining battery level of the secondary battery B1 becomes less than or equal to threshold X3 at time t32, the charge and discharge control circuit 13 determines to perform switching between the secondary batteries 11 subjected to charging and discharging. According to this determination, the charge and discharge control circuit 13 sets the secondary battery B1 as the charge-side secondary battery, and the secondary battery B2 as the discharge-side secondary battery. As a result, the remaining battery level of the secondary battery B1 increases, and the remaining battery level of the secondary battery B2 decreases.

At time t33, the remaining battery level of the discharge-side secondary battery B2 becomes less than or equal to threshold X3. Meanwhile, at time t33, the remaining battery level of the charge-side secondary battery B1 is less than threshold X1.

When the remaining battery level of the discharge-side secondary battery B2 becomes less than or equal to threshold X3 at time t33, the charge and discharge control circuit 13 determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

Subsequently, switching between the secondary batteries 11 subjected to charging and discharging is performed each time the remaining battery level of the discharge-side secondary battery 11 is less than or equal to threshold X3, in the same manner.

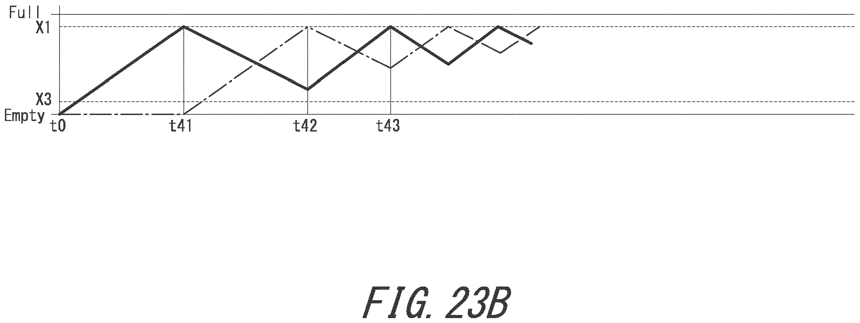

FIG. 23B is a timing chart illustrating operation according to Comparative Example 2 of the charging device 1 in the case where the charge rate of the charge-side secondary battery 11 is higher than the discharge rate of the discharge-side secondary battery 11.

At time t41, the remaining battery level of the charge-side secondary battery B1 becomes greater than or equal to threshold X1. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

At time t42, the remaining battery level of the charge-side secondary battery B2 becomes greater than or equal to threshold X1. Meanwhile, at time t42, the remaining battery level of the discharge-side secondary battery B1 is greater than threshold X3.

When the remaining battery level of the secondary battery B2 becomes greater than or equal to threshold X1 at time t42, the charge and discharge control circuit 13 determines to perform switching between the secondary batteries 11 subjected to charging and discharging. According to this determination, the charge and discharge control circuit 13 sets the secondary battery B1 as the charge-side secondary battery, and the secondary battery B2 as the discharge-side secondary battery. As a result, the remaining battery level of the secondary battery B1 increases, and the remaining battery level of the secondary battery B2 decreases.

At time t43, the remaining battery level of the charge-side secondary battery B1 becomes greater than or equal to threshold X1. Meanwhile, at time t43, the remaining battery level of the discharge-side secondary battery B2 is greater than threshold X3.

When the remaining battery level of the charge-side secondary battery B1 becomes greater than or equal to threshold X1 at time t43, the charge and discharge control circuit 13 determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

Subsequently, switching between the secondary batteries 11 subjected to charging and discharging is performed each time the remaining battery level of the charge-side secondary battery 11 is greater than or equal to threshold X1, in the same manner.

In Comparative Example 2 illustrated in FIGS. 23A and 23B, switching between the secondary batteries 11 subjected to charging and discharging is performed each time the remaining battery level of the discharge-side secondary battery 11 is less than or equal to threshold X3 and each time the remaining battery level of the charge-side secondary battery 11 is greater than or equal to threshold X1, due to the difference between the charge rate and the discharge rate. In particular, the frequency of switching increases as the time passes from the initial state. Therefore, in Comparative Example 2, switching between the secondary batteries 11 subjected to charging and discharging is performed frequently. This increases power consumption by switching, and causes power wastage.

The operation of the charging device 1 according to this embodiment is described below. Although an example of setting a plurality of thresholds for each of the charge amount detection threshold and the discharge amount detection threshold has been described above, the present disclosure is not limited to such.

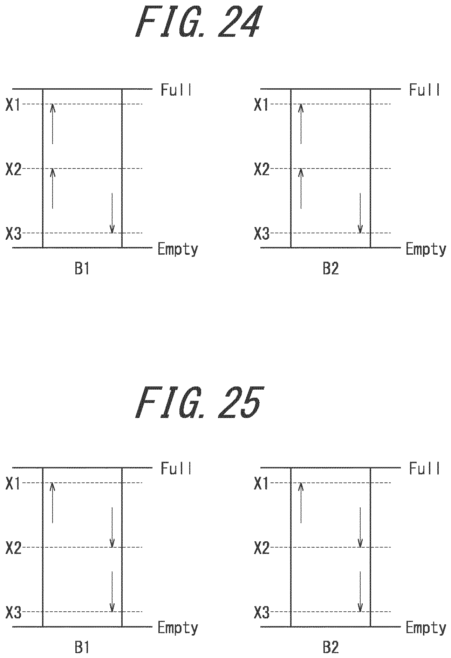

One example is to set two thresholds: thresholds X1 and X2 each as the charge amount detection threshold, and set one threshold: threshold X3 as the discharge amount detection threshold, as illustrated in FIG. 24.

In this case, each time the remaining battery level of the charge-side secondary battery 11 becomes greater than or equal to threshold X1 or X2, the charge and discharge control circuit 13 determines whether or not the remaining battery level of the discharge-side secondary battery 11 is less than or equal to threshold X3. In the case where the remaining battery level of the discharge-side secondary battery 11 is less than or equal to threshold X3, the charge and discharge control circuit 13 performs switching between the secondary batteries 11 subjected to charging and discharging.

Moreover, when the remaining battery level of the discharge-side secondary battery 11 becomes less than or equal to threshold X3, the charge and discharge control circuit 13 determines whether or not the remaining battery level of the charge-side secondary battery 11 is greater than or equal to threshold X2. In the case where the remaining battery level of the charge-side secondary battery 11 is greater than or equal to threshold X2, the charge and discharge control circuit 13 performs switching between the secondary batteries 11 subjected to charging and discharging.

Another example is to set one threshold: threshold X1 as the charge amount detection threshold, and set two thresholds: thresholds X2 and X3 each as the discharge amount detection threshold, as illustrated in FIG. 25.

In this case, each time the remaining battery level of the discharge-side secondary battery 11 becomes less than or equal to threshold X2 or X3, the charge and discharge control circuit 13 determines whether or not the remaining battery level of the charge-side secondary battery 11 is greater than or equal to threshold X1. In the case where the remaining battery level of the charge-side secondary battery 11 is greater than or equal to threshold X1, the charge and discharge control circuit 13 performs switching between the secondary batteries 11 subjected to charging and discharging.

Moreover, when the remaining battery level of the charge-side secondary battery 11 becomes greater than or equal to threshold X1, the charge and discharge control circuit 13 determines whether or not the remaining battery level of the discharge-side secondary battery 11 is less than or equal to threshold X2. In the case where the remaining battery level of the discharge-side secondary battery 11 is less than or equal to threshold X2, the charge and discharge control circuit 13 performs switching between the secondary batteries 11 subjected to charging and discharging.

An operation example (FIG. 24) of setting two thresholds: thresholds X1 and X2 each as the charge amount detection threshold and setting one threshold: threshold X3 as the discharge amount detection threshold is hereafter referred to as Example 1. An operation example (FIG. 25) of setting one threshold: threshold X1 as the charge amount detection threshold and setting two thresholds: thresholds X2 and X3 each as the discharge amount detection threshold is hereafter referred to as Example 2. An operation example of setting a plurality of (two) thresholds each as the charge amount detection threshold and a plurality of (two) thresholds each as the discharge amount detection threshold is hereafter referred to as Example 3.

Operation according to each of Examples 1 to 3 of the charging device 1 is described below.

Operation according to Example 1 of the charging device 1 is described below.

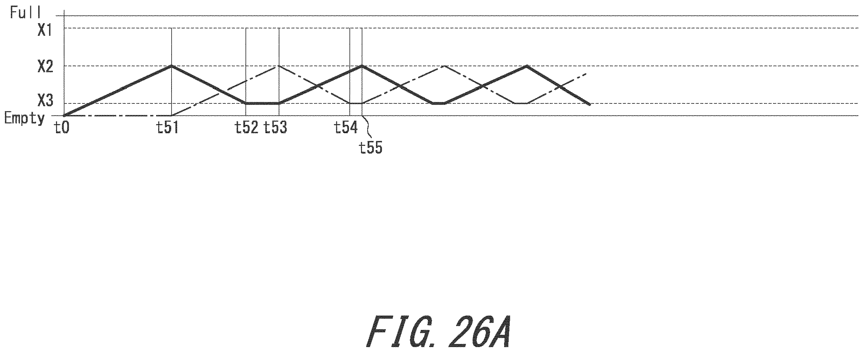

FIG. 26A is a timing chart illustrating operation according to Operation Example 1 of the charging device 1 in the case where the discharge rate of the discharge-side secondary battery 11 is higher than the charge rate of the charge-side secondary battery 11.

At time t51, the remaining battery level of the charge-side secondary battery B1 becomes greater than or equal to threshold X2. At time t51, the remaining battery level of the charge-side secondary battery B1 is greater than or equal to threshold X2, and the remaining battery level of the discharge-side secondary battery B2 is less than or equal to threshold X3. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

At time t52, the remaining battery level of the discharge-side secondary battery B1 becomes less than or equal to threshold X3. Meanwhile, at time t52, the remaining battery level of the charge-side secondary battery B2 is less than threshold X2.

When the remaining battery level of the secondary battery B1 becomes less than or equal to threshold X3 at time t52, the charge and discharge control circuit 13 stops discharging the secondary battery B1. As a result, the remaining battery level of the secondary battery B1 is kept constant at a value less than or equal to threshold X3. Since the remaining battery level of the charge-side secondary battery B2 is not greater than or equal to threshold X2 at time t52, the charge and discharge control circuit 13 does not perform switching between the secondary batteries 11 subjected to charging and discharging. The charging of the secondary battery B2 is thus continued.

At time t53, the remaining battery level of the charge-side secondary battery B2 becomes greater than or equal to threshold X2. At time t53, the remaining battery level of the charge-side secondary battery B2 is greater than or equal to threshold X2, and the remaining battery level of the discharge-side secondary battery B1 is less than or equal to threshold X3. The charge and discharge control circuit 13 accordingly determines to perform switching between the secondary batteries 11 subjected to charging and discharging. According to this determination, the charge and discharge control circuit 13 sets the secondary battery B1 as the charge-side secondary battery, and the secondary battery B2 as the discharge-side secondary battery. As a result, the remaining battery level of the secondary battery B1 increases, and the remaining battery level of the secondary battery B2 decreases.

At time t54, the remaining battery level of the discharge-side secondary battery B2 becomes less than or equal to threshold X3. Meanwhile, at time t54, the remaining battery level of the charge-side secondary battery B1 is less than threshold X2.

When the remaining battery level of the discharge-side secondary battery B2 becomes less than or equal to threshold X3 at time t54, the charge and discharge control circuit 13 stops discharging the secondary battery B2. As a result, the remaining battery level of the secondary battery B2 is kept constant at a value less than or equal to threshold X3. Since the remaining battery level of the charge-side secondary battery B1 is not greater than or equal to threshold X2 at time t54, the charge and discharge control circuit 13 does not perform switching between the secondary batteries 11 subjected to charging and discharging. The charging of the secondary battery B1 is thus continued.

At time t55, the remaining battery level of the charge-side secondary battery B1 becomes greater than or equal to threshold X2. At time t55, the remaining battery level of the charge-side secondary battery B1 is greater than or equal to threshold X2, and the remaining battery level of the discharge-side secondary battery B2 is less than or equal to threshold X3. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

Subsequently, switching between the secondary batteries 11 subjected to charging and discharging is performed in the same manner.

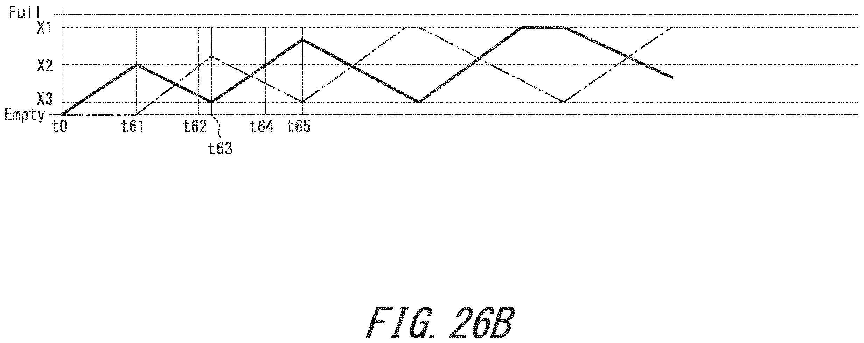

FIG. 26B is a timing chart illustrating operation according to Operation Example 1 of the charging device 1 in the case where the charge rate of the charge-side secondary battery 11 is higher than the discharge rate of the discharge-side secondary battery 11.

At time t61, the remaining battery level of the charge-side secondary battery B1 becomes greater than or equal to threshold X2. At time t61, the remaining battery level of the charge-side secondary battery B1 is greater than or equal to threshold X2, and the remaining battery level of the discharge-side secondary battery B2 is less than or equal to threshold X3. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

At time t62, the remaining battery level of the charge-side secondary battery B2 becomes greater than or equal to threshold X2. Meanwhile, at time t62, the remaining battery level of the discharge-side secondary battery B1 is greater than threshold X3.

At time t62, the remaining battery level of the charge-side secondary battery B2 is greater than or equal to threshold X2, but the remaining battery level of the discharge-side secondary battery B1 is greater than threshold X3. Accordingly, the charge and discharge control circuit 13 continues discharging the secondary battery B1 and charging the secondary battery B2. As a result, the remaining battery level of the secondary battery B1 decreases, and the remaining battery level of the secondary battery B2 increases.

At time t63, the remaining battery level of the discharge-side secondary battery B1 becomes less than or equal to threshold X3. At time t63, the remaining battery level of the discharge-side secondary battery B1 is less than or equal to threshold X3, and the remaining battery level of the charge-side secondary battery B2 is greater than or equal to threshold X2. The charge and discharge control circuit 13 accordingly determines to perform switching between the secondary batteries 11 subjected to charging and discharging. According to this determination, the charge and discharge control circuit 13 sets the secondary battery B1 as the charge-side secondary battery, and the secondary battery B2 as the discharge-side secondary battery. As a result, the remaining battery level of the secondary battery B1 increases, and the remaining battery level of the secondary battery B2 decreases.

At time t64, the remaining battery level of the charge-side secondary battery B1 becomes greater than or equal to threshold X2. Meanwhile, at time t64, the remaining battery level of the discharge-side secondary battery B2 is greater than threshold X3.

At time t64, the remaining battery level of the charge-side secondary battery B1 is greater than or equal to threshold X2, but the remaining battery level of the discharge-side secondary battery B2 is greater than threshold X3. Accordingly, the charge and discharge control circuit 13 continues charging the secondary battery B1 and discharging the secondary battery B2. As a result, the remaining battery level of the secondary battery B1 increases, and the remaining battery level of the secondary battery B2 decreases.

At time t65, the remaining battery level of the discharge-side secondary battery B2 becomes less than or equal to threshold X3. At time t65, the remaining battery level of the discharge-side secondary battery B2 is less than or equal to threshold X3, and the remaining battery level of the charge-side secondary battery B1 is greater than or equal to threshold X2. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

Subsequently, switching between the secondary batteries 11 subjected to charging and discharging is performed in the same manner.

In Example 1 illustrated in FIGS. 26A and 26B, when the remaining battery level of the charge-side secondary battery 11 becomes greater than or equal to threshold X2, the device 3 can be charged. This reduces the time during which the device 3 cannot be charged, and accelerates the charging of the device 3, as compared with Comparative Examples 1 and 2.

Moreover, even in the case where the discharge rate is higher than the charge rate and the remaining battery level of the discharge-side secondary battery 11 becomes less than or equal to threshold X3, switching between the secondary batteries 11 subjected to charging and discharging is performed after the remaining battery level of the charge-side secondary battery 11 becomes greater than or equal to threshold X2. Thus, switching between the secondary batteries 11 subjected to charging and discharging is performed after the charge-side secondary battery 11 is sufficiently charged. This prevents frequent switching between the secondary batteries 11 subjected to charging and discharging.

Moreover, even in the case where the charge rate is higher than the discharge rate and the remaining battery level of the charge-side secondary battery 11 becomes greater than or equal to threshold X2, switching between the secondary batteries 11 subjected to charging and discharging is performed after the remaining battery level of the discharge-side secondary battery 11 becomes less than or equal to threshold X3. Thus, switching between the secondary batteries 11 subjected to charging and discharging is performed after the discharge-side secondary battery 11 is sufficiently discharged. This prevents frequent switching between the secondary batteries 11 subjected to charging and discharging.

Operation according to Example 2 of the charging device 1 is described below.

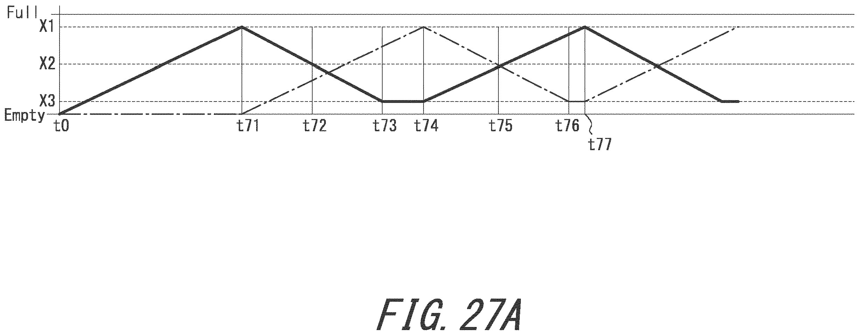

FIG. 27A is a timing chart illustrating operation according to Operation Example 2 of the charging device 1 in the case where the discharge rate of the discharge-side secondary battery 11 is higher than the charge rate of the charge-side secondary battery 11.

At time t71, the remaining battery level of the charge-side secondary battery B1 becomes greater than or equal to threshold X1. At time t71, the remaining battery level of the charge-side secondary battery B1 is greater than or equal to threshold X1, and the remaining battery level of the discharge-side secondary battery B2 is less than or equal to threshold X2. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

At time t72, the remaining battery level of the discharge-side secondary battery B1 becomes less than or equal to threshold X2. Meanwhile, at time t72, the remaining battery level of the charge-side secondary battery B2 is less than threshold X2.

At time t72, the remaining battery level of the discharge-side secondary battery B1 is less than or equal to threshold X2, but the remaining battery level of the charge-side secondary battery B2 is not greater than or equal to threshold X1. Accordingly, the charge and discharge control circuit 13 continues discharging the secondary battery B1 and charging the secondary battery B2. As a result, the remaining battery level of the secondary battery B1 decreases, and the remaining battery level of the secondary battery B2 increases.

At time t73, the remaining battery level of the discharge-side secondary battery B1 becomes less than or equal to threshold X3. Meanwhile, at time t73, the remaining battery level of the charge-side secondary battery B2 is greater than threshold X2, but less than threshold X1.

At time t73, the remaining battery level of the discharge-side secondary battery B1 is less than or equal to threshold X3, but the remaining battery level of the charge-side secondary battery B2 is not greater than or equal to threshold X1. The charge and discharge control circuit 13 accordingly stops discharging the secondary battery B1, and continues charging the secondary battery B2. As a result, the remaining battery level of the secondary battery B1 is kept constant at a value less than or equal to threshold X3. Meanwhile, the remaining battery level of the secondary battery B2 increases.

At time t74, the remaining battery level of the charge-side secondary battery B2 becomes greater than or equal to threshold X1. At time t74, the remaining battery level of the charge-side secondary battery B2 is greater than or equal to threshold X1, and the remaining battery level of the discharge-side secondary battery B1 is less than or equal to threshold X2. The charge and discharge control circuit 13 accordingly determines to perform switching between the secondary batteries 11 subjected to charging and discharging. According to this determination, the charge and discharge control circuit 13 sets the secondary battery B1 as the charge-side secondary battery, and the secondary battery B2 as the discharge-side secondary battery. As a result, the remaining battery level of the secondary battery B1 increases, and the remaining battery level of the secondary battery B2 decreases.

At time t75, the remaining battery level of the discharge-side secondary battery B2 becomes less than or equal to threshold X2. Meanwhile, at time t75, the remaining battery level of the charge-side secondary battery B1 is less than threshold X2.

At time t75, the remaining battery level of the discharge-side secondary battery B2 is less than or equal to threshold X2, but the remaining battery level of the charge-side secondary battery B1 is not greater than or equal to threshold X1. Accordingly, the charge and discharge control circuit 13 continues charging the secondary battery B1 and discharging the secondary battery B2. As a result, the remaining battery level of the secondary battery B1 increases, and the remaining battery level of the secondary battery B2 decreases.

At time t76, the remaining battery level of the discharge-side secondary battery B2 becomes less than or equal to threshold X3. Meanwhile, at time t76, the remaining battery level of the charge-side secondary battery B1 is less than threshold X1.

At time t76, the remaining battery level of the discharge-side secondary battery B2 is less than or equal to threshold X3, but the remaining battery level of the charge-side secondary battery B1 is not greater than or equal to threshold X1. The charge and discharge control circuit 13 accordingly stops discharging the secondary battery B2, and continues charging the secondary battery B1. As a result, the remaining battery level of the secondary battery B1 increases, and the remaining battery level of the secondary battery B2 is kept constant at a value less than or equal to threshold X3.

At time t77, the remaining battery level of the charge-side secondary battery B1 becomes greater than or equal to threshold X1. At time t77, the remaining battery level of the charge-side secondary battery B1 is greater than or equal to threshold X1, and the remaining battery level of the discharge-side secondary battery B2 is less than or equal to threshold X2. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

Subsequently, switching between the secondary batteries 11 subjected to charging and discharging is performed in the same manner.

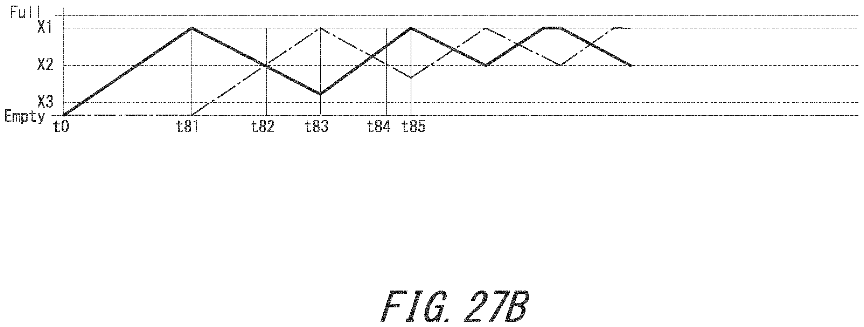

FIG. 27B is a timing chart illustrating operation according to Operation Example 2 of the charging device 1 in the case where the charge rate of the charge-side secondary battery 11 is higher than the discharge rate of the discharge-side secondary battery 11.

At time t81, the remaining battery level of the charge-side secondary battery B1 becomes greater than or equal to threshold X1. At time t81, the remaining battery level of the charge-side secondary battery B1 is greater than or equal to threshold X1, and the remaining battery level of the discharge-side secondary battery B2 is less than or equal to threshold X2. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

At time t82, the remaining battery level of the discharge-side secondary battery B1 becomes less than or equal to threshold X2. Meanwhile, at time t82, the remaining battery level of the charge-side secondary battery B2 is less than threshold X1.

At time t82, the remaining battery level of the discharge-side secondary battery B1 is less than or equal to threshold X2, but the remaining battery level of the charge-side secondary battery B2 is not greater than or equal to threshold X1. Accordingly, the charge and discharge control circuit 13 continues discharging the secondary battery B1 and charging the secondary battery B2. As a result, the remaining battery level of the secondary battery B1 decreases, and the remaining battery level of the secondary battery B2 increases.

At time t83, the remaining battery level of the charge-side secondary battery B2 becomes greater than or equal to threshold X1. At time t83, the remaining battery level of the discharge-side secondary battery B1 is less than threshold X2, but greater than threshold X3.

At time t83, the remaining battery level of the charge-side secondary battery B2 is greater than or equal to threshold X1, and the remaining battery level of the discharge-side secondary battery B1 is less than or equal to threshold X2. The charge and discharge control circuit 13 accordingly determines to perform switching between the secondary batteries 11 subjected to charging and discharging. According to this determination, the charge and discharge control circuit 13 sets the secondary battery B1 as the charge-side secondary battery, and the secondary battery B2 as the discharge-side secondary battery. As a result, the remaining battery level of the secondary battery B1 increases, and the remaining battery level of the secondary battery B2 decreases.

At time t84, the remaining battery level of the discharge-side secondary battery B2 becomes less than or equal to threshold X2. Meanwhile, at time t84, the remaining battery level of the charge-side secondary battery B1 is greater than threshold X2, but less than threshold X1.

At time t84, the remaining battery level of the discharge-side secondary battery B2 is less than or equal to threshold X2, but the remaining battery level of the charge-side secondary battery B1 is not greater than or equal to threshold X1. Accordingly, the charge and discharge control circuit 13 continues charging the secondary battery B1 and discharging the secondary battery B2. As a result, the remaining battery level of the secondary battery B1 increases, and the remaining battery level of the secondary battery B2 decreases.

At time t85, the remaining battery level of the charge-side secondary battery B1 becomes greater than or equal to threshold X1. At time t85, the remaining battery level of the discharge-side secondary battery B2 is less than threshold X2, but greater than threshold X3.

At time t85, the remaining battery level of the charge-side secondary battery B1 is greater than or equal to threshold X1, and the remaining battery level of the discharge-side secondary battery B2 is less than or equal to threshold X2. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

Subsequently, switching between the secondary batteries 11 subjected to charging and discharging is performed in the same manner.

In Example 2 illustrated in FIGS. 27A and 27B, even in the case where the remaining battery level of the discharge-side secondary battery 11 becomes less than or equal to threshold X3 and the charging of the device 3 is stopped, switching between the secondary batteries 11 subjected to charging and discharging is performed after the charge-side secondary battery 11 is charged so that its remaining battery level is greater than or equal to threshold X1. This prevents frequent switching between the secondary batteries 11 subjected to charging and discharging, unlike Comparative Example 2. In particular, in the case where the charge rate is higher than the discharge rate, charging and discharging are performed while storing at least a fixed amount of power in the secondary battery 11. Hence, even in the case where the charge rate decreases, the device 3 can be charged with power stored in the secondary battery 11.

In Example 2 illustrated in FIGS. 27A and 27B, when the remaining battery level of the discharge-side secondary battery 11 becomes less than or equal to threshold X2, whether or not to perform switching between the secondary batteries 11 subjected to charging and discharging is determined. Therefore, in the case where the remaining battery level of the charge-side secondary battery 11 becomes greater than or equal to threshold X1 and the charging is stopped, switching between the secondary batteries 11 subjected to charging and discharging is performed when the remaining battery level of the discharge-side secondary battery 11 becomes less than or equal to threshold X2. Thus, switching between the secondary batteries 11 subjected to charging and discharging can be performed at earlier timing than in the case where only threshold X3 which is less than threshold X2 is provided as the discharge amount detection threshold. This suppresses wastage of power generated by the energy harvesting section 2.

Moreover, even in the case where the discharge rate is higher than the charge rate and the remaining battery level of the discharge-side secondary battery 11 becomes less than or equal to threshold X3, switching between the secondary batteries 11 subjected to charging and discharging is performed after the remaining battery level of the charge-side secondary battery 11 becomes greater than or equal to threshold X1. Thus, switching between the secondary batteries 11 subjected to charging and discharging is performed after the charge-side secondary battery 11 is sufficiently charged. This prevents frequent switching between the secondary batteries 11 subjected to charging and discharging.

Moreover, even in the case where the charge rate is higher than the discharge rate and the remaining battery level of the charge-side secondary battery 11 becomes greater than or equal to threshold X1, switching between the secondary batteries 11 subjected to charging and discharging is performed after the remaining battery level of the discharge-side secondary battery 11 becomes less than or equal to threshold X2. Thus, switching between the secondary batteries 11 subjected to charging and discharging is performed after the discharge-side secondary battery 11 is discharged to a certain extent. This prevents frequent switching between the secondary batteries 11 subjected to charging and discharging.

Operation according to Example 3 of the charging device 1 is described below.

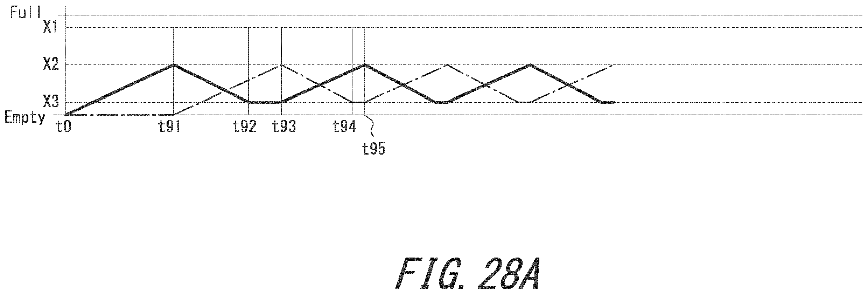

FIG. 28A is a timing chart illustrating operation according to Operation Example 3 of the charging device 1 in the case where the discharge rate of the discharge-side secondary battery 11 is higher than the charge rate of the charge-side secondary battery 11.

At time t91, the remaining battery level of the charge-side secondary battery B1 becomes greater than or equal to threshold X2. At time t91, the remaining battery level of the charge-side secondary battery B1 is greater than or equal to threshold X2, and the remaining battery level of the discharge-side secondary battery B2 is less than or equal to threshold X3. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

At time t92, the remaining battery level of the discharge-side secondary battery B1 becomes less than or equal to threshold X3. Meanwhile, at time t92, the remaining battery level of the charge-side secondary battery B2 is less than threshold X2.

When the remaining battery level of the secondary battery B1 becomes less than or equal to threshold X3 at time t92, the charge and discharge control circuit 13 stops discharging the secondary battery B1. As a result, the remaining battery level of the secondary battery B1 is kept constant at a value less than or equal to threshold X3. Since the remaining battery level of the charge-side secondary battery B2 is less than threshold X2 at time t92, the charge and discharge control circuit 13 does not perform switching between the secondary batteries 11 subjected to charging and discharging. The charging of the secondary battery B2 is thus continued.

At time t93, the remaining battery level of the charge-side secondary battery B2 becomes greater than or equal to threshold X2. At time t93, the remaining battery level of the charge-side secondary battery B2 is greater than or equal to threshold X2, and the remaining battery level of the discharge-side secondary battery B1 is less than or equal to threshold X3. The charge and discharge control circuit 13 accordingly determines to perform switching between the secondary batteries 11 subjected to charging and discharging. According to this determination, the charge and discharge control circuit 13 sets the secondary battery B1 as the charge-side secondary battery, and the secondary battery B2 as the discharge-side secondary battery. As a result, the remaining battery level of the secondary battery B1 increases, and the remaining battery level of the secondary battery B2 decreases.

At time t94, the remaining battery level of the discharge-side secondary battery B2 becomes less than or equal to threshold X3. Meanwhile, at time t94, the remaining battery level of the charge-side secondary battery B1 is less than threshold X2.

When the remaining battery level of the secondary battery B2 becomes less than or equal to threshold X3 at time t94, the charge and discharge control circuit 13 stops discharging the secondary battery B2. As a result, the remaining battery level of the secondary battery B2 is kept constant at a value less than or equal to threshold X3. Since the remaining battery level of the charge-side secondary battery B1 is less than threshold X2 at time t94, the charge and discharge control circuit 13 does not perform switching between the secondary batteries 11 subjected to charging and discharging. The charging of the secondary battery B1 is thus continued.

At time t95, the remaining battery level of the charge-side secondary battery B1 becomes greater than or equal to threshold X2. At time t95, the remaining battery level of the charge-side secondary battery B1 is greater than or equal to threshold X2, and the remaining battery level of the discharge-side secondary battery B2 is less than or equal to threshold X3. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

Subsequently, switching between the secondary batteries 11 subjected to charging and discharging is performed in the same manner.

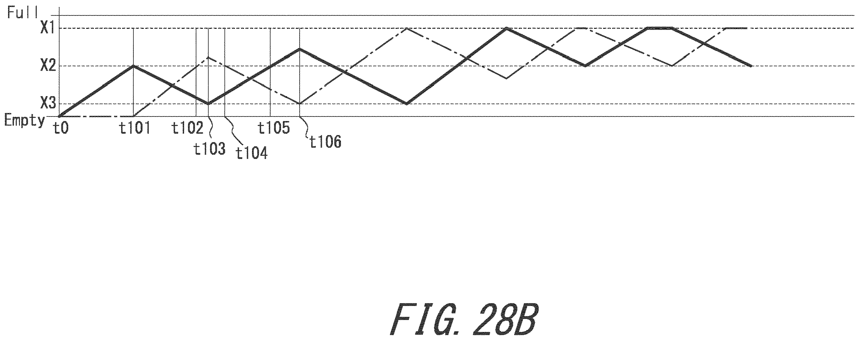

FIG. 28B is a timing chart illustrating operation according to Operation Example 3 of the charging device 1 in the case where the charge rate of the charge-side secondary battery 11 is higher than the discharge rate of the discharge-side secondary battery 11.

At time t101, the remaining battery level of the charge-side secondary battery B1 becomes greater than or equal to threshold X2. At time t101, the remaining battery level of the charge-side secondary battery B1 is greater than or equal to threshold X2, and the remaining battery level of the discharge-side secondary battery B2 is less than or equal to threshold X3. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

At time t102, the remaining battery level of the charge-side secondary battery B2 becomes greater than or equal to threshold X2. Meanwhile, at time t102, the remaining battery level of the discharge-side secondary battery B1 is greater than threshold X3.

At time t102, the remaining battery level of the charge-side secondary battery B2 is greater than or equal to threshold X2, but the remaining battery level of the discharge-side secondary battery B1 is greater than threshold X3. Accordingly, the charge and discharge control circuit 13 continues discharging the secondary battery B1 and charging the secondary battery B2. As a result, the remaining battery level of the secondary battery B1 decreases, and the remaining battery level of the secondary battery B2 increases.

At time t103, the remaining battery level of the discharge-side secondary battery B1 becomes less than or equal to threshold X3. At time t103, the remaining battery level of the discharge-side secondary battery B1 is less than or equal to threshold X3, and the remaining battery level of the charge-side secondary battery B2 is greater than or equal to threshold X2. The charge and discharge control circuit 13 accordingly determines to perform switching between the secondary batteries 11 subjected to charging and discharging. According to this determination, the charge and discharge control circuit 13 sets the secondary battery B1 as the charge-side secondary battery, and the secondary battery B2 as the discharge-side secondary battery. As a result, the remaining battery level of the secondary battery B1 increases, and the remaining battery level of the secondary battery B2 decreases.

At time t104, the remaining battery level of the discharge-side secondary battery B2 becomes less than or equal to threshold X2. Meanwhile, at time t104, the remaining battery level of the charge-side secondary battery B1 is less than threshold X2.

At time t104, the remaining battery level of the discharge-side secondary battery B2 is less than or equal to threshold X2, but the remaining battery level of the charge-side secondary battery B1 is less than threshold X2. Accordingly, the charge and discharge control circuit 13 continues charging the secondary battery B1 and discharging the secondary battery B2. As a result, the remaining battery level of the secondary battery B1 increases, and the remaining battery level of the secondary battery B2 decreases.

At time t105, the remaining battery level of the charge-side secondary battery B1 becomes greater than or equal to threshold X2. Meanwhile, at time t105, the remaining battery level of the discharge-side secondary battery B2 is greater than threshold X3.

At time t105, the remaining battery level of the charge-side secondary battery B1 is greater than or equal to threshold X2, but the remaining battery level of the discharge-side secondary battery B2 is greater than threshold X3. Accordingly, the charge and discharge control circuit 13 continues charging the secondary battery B1 and discharging the secondary battery B2. As a result, the remaining battery level of the secondary battery B1 increases, and the remaining battery level of the secondary battery B2 decreases.

At time t106, the remaining battery level of the discharge-side secondary battery B2 is less than or equal to threshold X3, and the remaining battery level of the charge-side secondary battery B1 is greater than or equal to threshold X2. The charge and discharge control circuit 13 accordingly determines to perform switching between the secondary batteries 11 subjected to charging and discharging. According to this determination, the charge and discharge control circuit 13 sets the secondary battery B1 as the discharge-side secondary battery, and the secondary battery B2 as the charge-side secondary battery. As a result, the remaining battery level of the secondary battery B1 decreases, and the remaining battery level of the secondary battery B2 increases.

Subsequently, switching between the secondary batteries 11 subjected to charging and discharging is performed in the same manner.

In Example 3 illustrated in FIGS. 28A and 28B, when the remaining battery level of the charge-side secondary battery 11 becomes greater than or equal to threshold X2, the device 3 can be charged. This reduces the time during which the device 3 cannot be charged, and accelerates the charging of the device 3, as compared with Comparative Examples 1 and 2.

Moreover, even in the case where the discharge rate is higher than the charge rate and the remaining battery level of the discharge-side secondary battery 11 becomes less than or equal to threshold X3, switching between the secondary batteries 11 subjected to charging and discharging is performed after the remaining battery level of the charge-side secondary battery 11 becomes greater than or equal to threshold X2. Thus, switching between the secondary batteries 11 subjected to charging and discharging is performed after the charge-side secondary battery 11 is sufficiently charged. This prevents frequent switching between the secondary batteries 11 subjected to charging and discharging.

Moreover, even in the case where the charge rate is higher than the discharge rate and the remaining battery level of the charge-side secondary battery 11 becomes greater than or equal to threshold X2, switching between the secondary batteries 11 subjected to charging and discharging is performed after the remaining battery level of the discharge-side secondary battery 11 becomes less than or equal to threshold X3. Thus, switching between the secondary batteries 11 subjected to charging and discharging is performed after the discharge-side secondary battery 11 is sufficiently discharged. This prevents frequent switching between the secondary batteries 11 subjected to charging and discharging.

In the case of detecting that the device 3 is not connected or the device 3 is fully charged, the charge and discharge control circuit 13 may charge the plurality of secondary batteries 11 one by one with power generated by the energy harvesting section 2 until the remaining battery level reaches a predetermined charge stop threshold.

Here, a plurality of thresholds each settable as the charge stop threshold may be prepared, and the charge and discharge control circuit 13 may use a threshold selected by the user from among the plurality of thresholds, as the charge stop threshold. Each secondary battery 11 may be removable from the charging device 1, as mentioned earlier. The type of the secondary battery 11 is not limited, as long as it can be charged and discharged. For example, in the case where a lithium ion battery is used as the secondary battery 11, it is desirable to stop charging the secondary battery 11 before it is fully charged, because a lithium ion battery has a property of easily degrading in performance when it is repeatedly fully charged. It is also desirable to stop discharging the secondary battery 11 before it becomes empty, because a lithium ion battery has a property of being overdischarged and easily degrading in performance if it is unused for a long time in the empty state.

Hence, by using, as the charge stop threshold, the threshold selected by user operation from among the plurality of thresholds prepared as the charge stop threshold, it is possible to select whether to charge the secondary battery 11 to the full charge state or to stop charging the secondary battery 11 at a level at which performance degradation of the secondary battery 11 is avoidable.

In this embodiment, the secondary battery 11 may comply with a constant-current/constant-voltage charging method of performing constant-current charging when charging starts and switching to constant-voltage charging when the battery voltage of the secondary battery 11 reaches a predetermined voltage. In this case, it is desirable that threshold X1 which is the maximum value of the thresholds each set as the charge amount detection threshold is a value that is not greater than and is near the remaining battery level of the secondary battery 11 corresponding to the voltage at which the charging of the secondary battery 11 switches from constant-current charging to constant-voltage charging. Thus, the secondary battery 11 can be charged close to the full charge state at high speed.

In this embodiment, the charging device 1 and the device 3 are connected via a USB interface. Here, the device 3 might disconnect from the charging device 1 connected via the USB interface, once the charging from the charging device 1 has stopped. In this case, to charge the device 3 by the charging device 1 again, it is necessary to physically disconnect the charging device 1 and the device 3 connected via the USB interface and then reconnect the charging device 1 and the device 3.

Hence, in this embodiment, the charging device 1 may have a function of electrically disconnecting from the device 3 and then reconnecting to the device 3, when the remaining battery level of the charge-side secondary battery 11 becomes greater than or equal to the minimum threshold of the plurality of thresholds each set as the charge amount detection threshold. Such a function makes it possible to automatically start charging the device 3 from the charge-side secondary battery 11.

Typically, in a USB interface, data and power are transferred using four signal lines: VBUS, GND, D+, and D-. Electrically disconnecting the charging device 1 and the device 3 is to electrically turn off the four signal lines while maintaining physical connection between the charging device 1 and the device 3 (e.g. the charging device 1 and the device 3 remain connected via a USB cable). Reconnecting the charging device 1 and the device 3 is to electrically return the four signal lines which have been electrically off, to an on state.

Thus, according to this embodiment, the charging device 1 includes: a plurality of secondary batteries 11 that are independently controllable in charging with power generated by energy harvesting and in discharging to supply stored power to a device 3; and a charge and discharge control circuit 13 that controls, from among the plurality of secondary batteries 11, a secondary battery 11 as a charge-side secondary battery, and a secondary battery 11 other than the secondary battery 11 as a discharge-side secondary battery. The charge and discharge control circuit 13 sets at least either of: a plurality of thresholds each as a charge amount detection threshold relating to a remaining battery level of the charge-side secondary battery 11; and a plurality of thresholds each as a discharge amount detection threshold relating to a remaining battery level of the discharge-side secondary battery 11. Each time the remaining battery level of the charge-side secondary battery 11 reaches any of the plurality of thresholds each set as the charge amount detection threshold and each time the remaining battery level of the discharge-side secondary battery 11 reaches any of the plurality of thresholds each set as the discharge amount detection threshold, the charge and discharge control circuit 13 determines whether or not to perform switching between the secondary batteries 11 subjected to charging and discharging, depending on the remaining battery level of the charge-side secondary battery 11 and the remaining battery level of the discharge-side secondary battery 11.

Each time the remaining battery level of the secondary battery 11 being charged reaches any of the plurality of thresholds each set as the charge amount detection threshold, whether or not to perform switching between the secondary batteries 11 subjected to charging and discharging is determined depending on the remaining battery level of the charge-side secondary battery 11 and the remaining battery level of the discharge-side secondary battery 11. In this way, switching between the secondary batteries 11 subjected to charging and discharging can be performed according to the stage of the remaining battery level of the secondary battery 11 being charged. Moreover, each time the remaining battery level of the secondary battery 11 being discharged reaches any of the plurality of thresholds each set as the discharge amount detection threshold, whether or not to perform switching between the secondary batteries 11 subjected to charging and discharging is determined depending on the remaining battery level of the charge-side secondary battery 11 and the remaining battery level of the discharge-side secondary battery 11. In this way, switching between the secondary batteries 11 subjected to charging and discharging can be performed according to the stage of the remaining battery level of the secondary battery 11 being discharged.

This enables finer charge and discharge control of the secondary battery 11 being charged and the secondary battery 11 being discharged, in response to fluctuating power generation. Consequently, frequent switching between the secondary batteries 11 subjected to charging and discharging can be prevented. Furthermore, power wastage can be suppressed, and the period during which the external device is not supplied with power can be reduced.

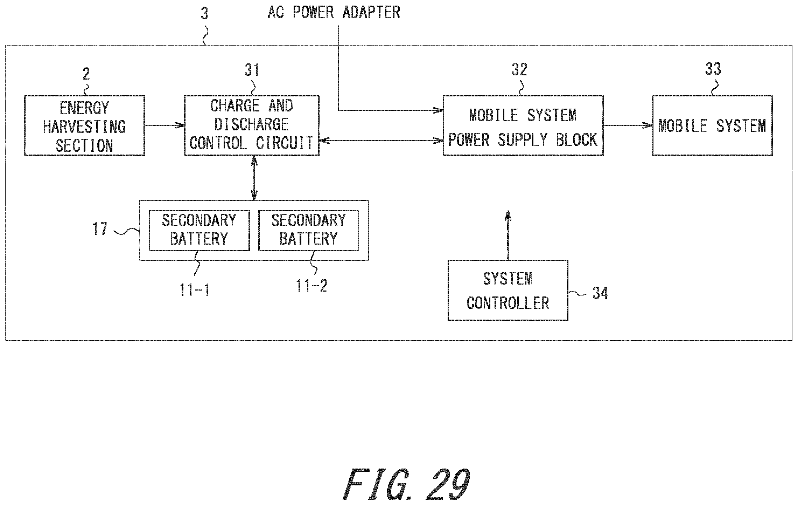

Although this embodiment describes an example where the charging device 1, the energy harvesting section 2, and the device 3 are provided separately, the present disclosure is not limited to such. For example, the present disclosure may be applied to an electronic device such as a smartphone including a solar cell module. FIG. 29 is a block diagram illustrating an example of the structure of such an electronic device (device 3). In FIG. 29, the same components as those in FIG. 1 are given the same reference signs, and their description is omitted.

The device 3 illustrated in FIG. 29 includes the energy harvesting section 2, the storage section 17 made up of the secondary batteries 11-1 and 11-2, a charge and discharge control circuit 31, a mobile system power supply block 32, a mobile system 33, and a system controller 34.

The charge and discharge control circuit 31 corresponds to the charge and discharge control circuit 13 illustrated in FIG. 1, and controls the charging of the secondary batteries 11-1 and 11-2 with power generated by the energy harvesting section 2 and the discharging of the secondary batteries 11-1 and 11-2.

The mobile system power supply block 32 is a block that manages power supply in the device 3. The mobile system power supply block 32 supplies power supplied from the commercial power supply via an AC power adapter or power discharged from the secondary battery 11, to the mobile system 33. The mobile system power supply block 32 also outputs power supplied from the commercial power supply to the storage section 17 via the charge and discharge control circuit 31, to charge the secondary batteries 11-1 and 11-2.

The mobile system 33 includes various structures for achieving various functions of the device 3, and is a load that operates with power supplied from the mobile system power supply block 32.

The system controller 34 controls the overall operation of the device 3.

Thus, the present disclosure is also applicable to an electronic device including a solar cell module.

While the disclosed device has been described by way of the drawings and embodiments, various changes or modifications may be easily made by those of ordinary skill in the art based on the present disclosure. Such various changes or modifications are therefore included in the scope of the present disclosure. For example, the functions included in the blocks, etc. may be rearranged without logical inconsistency, and a plurality of blocks, etc. may be combined into one block, etc. and a block, etc. may be divided into a plurality of blocks, etc.

### INDUSTRIAL APPLICABILITY

According to the present disclosure, a charging device and an electronic device that can speedily charge a charging target device while suppressing power wastage can be provided.

### REFERENCE SIGNS LIST

- 1: charging device
- 2: energy harvesting section
- 3: device
- 11-1, 11-2: secondary battery
- 12: AC-IF
- 13: charge and discharge control circuit
- 14: booster circuit
- 15: external IF
- 16: system control circuit
- 17: storage section
- 21: solar cell module
- 22: PV-IF
- 31: charge and discharge control circuit
- 32: mobile system power supply block
- 33: mobile system
- 34: system controller

## Claims

1. A charging device (1) comprising:
a plurality of secondary batteries (11-1, 11-2) that are independently controllable in charging with power generated by energy harvesting (2) and in discharging to supply stored power to an external device (3); and
a charge and discharge control unit (13) configured to control, from among the plurality of secondary batteries, a secondary battery as a charge-side secondary battery charged with the power generated by the energy harvesting, and a secondary battery other than the charge-side secondary battery as a discharge-side secondary battery discharged to supply stored power to the external device (3),
wherein at least either of: a plurality of thresholds each as a charge amount detection threshold relating to a remaining battery level of the charge-side secondary battery; and a plurality of thresholds each as a discharge amount detection threshold relating to a remaining battery level of the discharge-side secondary battery are set,
wherein thresholds relating to the remaining battery level of the discharge-side secondary battery are set respectively in association with the plurality of thresholds each set as the charge amount detection threshold,
thresholds relating to the remaining battery level of the charge-side secondary battery are set respectively in association with the plurality of thresholds each set as the discharge amount detection threshold, and
the charge and discharge control unit (13):
when the remaining battery level of the charge-side secondary battery reaches any of the plurality of thresholds each set as the charge amount detection threshold, determines whether or not to perform the switching, by comparison between a threshold that relates to the remaining battery level of the discharge-side secondary battery and is set in association with the threshold reached and the remaining battery level of the discharge-side secondary battery; and
when the remaining battery level of the discharge-side secondary battery reaches any of the plurality of thresholds each set as the discharge amount detection threshold, determines whether or not to perform the switching, by comparison between a threshold that relates to the remaining battery level of the charge-side secondary battery and is set in association with the threshold reached and the remaining battery level of the charge-side secondary battery, and
wherein a higher threshold relating to the remaining battery level of the discharge-side secondary battery is associated with a higher threshold set as the charge amount detection threshold,
a higher threshold relating to the remaining battery level of the charge-side secondary battery is associated with a higher threshold set as the discharge amount detection threshold, and
the charge and discharge control unit (13):
when the remaining battery level of the charge-side secondary battery becomes greater than or equal to a threshold set as the charge amount detection threshold, discharges the charge-side secondary battery and charges the discharge-side secondary battery with the power generated by the energy harvesting, in the case where the remaining battery level of the discharge-side secondary battery is less than a threshold that relates to the discharge-side secondary battery and is associated with the threshold; and
when the remaining battery level of the discharge-side secondary battery becomes less than or equal to a threshold set as the discharge amount detection threshold, discharges the charge-side secondary battery and charges the discharge-side secondary battery with the power generated by the energy harvesting, in the case where the remaining battery level of the charge-side secondary battery is greater than a threshold that relates to the charge-side secondary battery and is associated with the threshold.

2. The charging device (1) according to claim 1,
wherein, in a state where the supply of power to the external device (3) is stopped, when the remaining battery level of the charge-side secondary battery becomes greater than or equal to a minimum threshold of the plurality of thresholds each set as the charge amount detection threshold, the charging device (1) is electrically disconnected from the external device and then reconnected to the external device.

3. The charging device (1) according to claim 1 or 2,
wherein each secondary battery (11-1, 11-2) is capable of undergoing constant-current charging when charging starts and switching to constant-voltage charging when a battery voltage reaches a predetermined voltage, and
a maximum threshold of the plurality of thresholds each set as the charge amount detection threshold is a value equal to or near the remaining battery level of the secondary battery corresponding to the predetermined voltage.

4. The charging device (1) according to any one of claims 1 to 3,
wherein a power generation section that generates power by the energy harvesting is removably attachable to the charging device.

5. The charging device (1) according to any one of claims 1 to 4,
wherein, in the case where the supply of power to the external device (3) is stopped as a result of the external device being fully charged, the charge and discharge control unit (13) charges the plurality of secondary batteries one by one until the remaining battery level thereof reaches a predetermined charge stop threshold.

6. The charging device (1) according to claim 5,
wherein a plurality of thresholds are each settable as the charge stop threshold, and
the charge and discharge control unit (13) sets, as the charge stop threshold, any threshold selected by a user operation from among the plurality of thresholds each settable as the charge stop threshold.

## Patentansprüche

1. Eine Ladevorrichtung (1) umfassend:
eine Mehrzahl von Sekundärbatterien (11-1, 11-2), die unabhängig voneinander steuerbar sind beim Laden mit Energie, die durch Energy Harvesting (2) erzeugt wurde, und beim Entladen, um gespeicherte Energie an eine externe Vorrichtung (3) zu übertragen (3); und
eine Lade-und-Entlade-Kontrolleinheit (13), die so konfiguriert ist, dass sie aus der Mehrzahl von Sekundärbatterien eine Sekundärbatterie als eine ladeseitige Sekundärbatterie, die mit der Energie geladen wird, welche durch das Energy Harvesting erzeugt wurde, und eine weitere Sekundärbatterie, die von der ladeseitigen Sekundärbatterie verschieden ist, als eine entladeseitige Sekundärbatterie, die entladen wird, um gespeicherte Energie an die externe Vorrichtung (3) zu übertragen, kontrolliert,
wobei eingestellt werden wenigstens eines von: einer Mehrzahl von Schwellenwerten, jeder davon eine Ladungsmengen-Detektionsschwelle, die ein noch verbleibendes Batterielevel der ladeseitigen Sekundärbatterie betrifft; und einer Mehrzahl von Schwellenwerten, jeder davon eine Entladungsmengen-Detektionsschwelle, die ein noch verbleibendes Batterielevel der entladeseitigen Sekundärbatterie betrifft,
wobei Schwellenwerte, die das noch verbleibende Batterielevel der entladeseitigen Sekundärbatterie betreffen, jeweils eingestellt werden in Verbindung mit der Mehrzahl von Schwellenwerten von denen jeder eine Ladungsmengen-Detektionsschwelle ist,
Schwellenwerte, die das noch verbleibende Batterielevel der ladeseitigen Sekundärbatterie betreffen, jeweils eingestellt werden in Verbindung mit der Mehrzahl von Schwellenwerten von denen jeder eine Entladungsmengen-Detektionsschwelle ist, und
die Lade-und-Entlade-Kontrolleinheit (13):
wenn das verbleibende Batterielevel der ladeseitigen Sekundärbatterie irgendeinen der Mehrzahl von Schwellenwerten, von denen jeder eine Ladungsmengen-Detektionsschwelle ist, erreicht, bestimmt, ob oder ob nicht das Umschalten durchgeführt wird, durch Vergleich zwischen einem Schwellenwert, der das verbleibenden Batterielevel der entladeseitigen Sekundärbatterie betrifft und eingestellt ist in Verbindung mit der erreichten Schwelle, und dem verbleibenden Batterielevel der entladeseitigen Sekundärbatterie; und
wenn das verbleibende Batterielevel der entladeseitigen Sekundärbatterie irgendeinen der Mehrzahl von Schwellenwerten, von denen jeder eine Ladungsmengen-Detektionsschwelle ist, erreicht, bestimmt, ob oder ob nicht das Umschalten durchgeführt wird, durch Vergleich zwischen einem Schwellenwert, der das verbleibenden Batterielevel der ladeseitigen Sekundärbatterie betrifft und eingestellt ist in Verbindung mit der erreichten Schwelle, und dem verbleibenden Batterielevel der ladeseitigen Sekundärbatterie; und
wobei ein höherer Schwellenwert betreffend das verbleibende Batterielevel der entladeseitigen Sekundärbatterie verbunden ist mit einem höheren Schwellenwert, der als die Ladungsmengen-Detektionsschwelle eingestellt ist,
wobei ein höherer Schwellenwert betreffend das verbleibende Batterielevel der ladeseitigen Sekundärbatterie verbunden ist mit einem höheren Schwellenwert, der als die Entladungsmengen-Detektionsschwelle eingestellt ist, und
die Lade-und-Entlade-Kontrolleinheit (13):
wenn das verbleibende Batterielevel der ladeseitigen Sekundärbatterie größer oder gleich wird zu einem Schwellenwert, der als die Ladungsmengen-Detektionsschwelle eingestellt ist, die ladeseitige Sekundärbatterie entlädt und die entladeseitige Sekundärbatterie lädt mit der Energie, die durch das Energy Harvesting erzeugt wird, falls das verbleibende Batterielevel der entladeseitigen Sekundärbatterie weniger ist als ein Schwellenwert, der die entladeseitige Sekundärbatterie betrifft und mit dem Schwellenwert verbunden ist; und
wenn das verbleibende Batterielevel der entladeseitigen Sekundärbatterie kleiner oder gleich wird zu einem Schwellenwert, der als die Entladungsmengen-Detektionsschwelle eingestellt ist, die ladeseitige Sekundärbatterie entlädt und die entladeseitige Sekundärbatterie lädt mit der Energie, die durch das Energy Harvesting erzeugt wird, falls das verbleibende Batterielevel der ladeseitigen Sekundärbatterie größer ist als ein Schwellenwert, der die ladeseitige Sekundärbatterie betrifft und mit dem Schwellenwert verbunden ist.

2. Die Ladevorrichtung (1) gemäß Anspruch 1,
wobei in einem Zustand, in dem die Energiezufuhr zur externen Vorrichtung (3) gestoppt wird, wenn das verbleibende Batterielevel der ladeseitigen Sekundärbatterie größer oder gleich einer Minimalschwelle der Mehrzahl von Schwellenwerten, die jeder als die Ladungsmengen-Detektionsschwelle eingestellt wurden, wird, die Ladevorrichtung (1) elektrisch von der externen Vorrichtung getrennt wird und dann erneut mit der externen Vorrichtung verbunden wird.

3. Die Ladevorrichtung (1) gemäß Anspruch 1 oder 2,
wobei jede Sekundärbatterie (11-1, 11-2) dazu in der Lage ist, zu Beginn des Ladevorgangs mit konstantem Strom zu laden, und auf Laden mit konstanter Spannung umzuschalten, sobald eine Batteriespannung eine voreingestellte Spannung erreicht, und
eine Maximalschwelle der Mehrzahl von Schwellenwerten, die jeder als die Ladungsmengen-Detektionsschwelle eingestellt wurden, eine Wert ist, der gleich zu oder nahe zu dem verbleibenden Batterielevel der Sekundärbatterie ist, das zu der voreingestellten Spannung korrespondiert.

4. Die Ladevorrichtung (1) gemäß irgendeinem der Ansprüche 1 bis 3,
wobei eine Energieerzeugungs-Sektion, die durch das Energy Harvesting Energie erzeugt, abnehmbar an der Ladevorrichtung zu befestigen ist.

5. Die Ladevorrichtung (1) gemäß irgendeinem der Ansprüche 1 bis 4,
wobei, wenn die Energiezufuhr zur externen Vorrichtung (3) gestoppt wird als Resultat davon, dass die externe Vorrichtung vollständig geladen ist, die Lade-und-Entlade-Kontrolleinheit (13) die Mehrzahl der Sekundärbatterien einzeln nacheinander lädt, bis das verbleibende Batterielevel von ihnen eine voreingestellte Ladestop-Schwelle erreicht.

6. Die Ladevorrichtung (1) gemäß Anspruch 5,
wobei von einer Mehrzahl von Schwellenwerten jeder als die Ladestop-Schwelle einstellbar ist, und
die Lade-und-Entlade-Kontrolleinheit (13) als die Ladestop-Schwelle irgendeinen Schwellenwert einstellt, welcher durch eine Nutzereingabe aus der Mehrzahl von Schwellenwerten, von denen jeder als die Ladestop-Schwelle einstellbar ist, ausgewählt wird.

## Revendications

1. Dispositif de charge (1), comprenant :
une pluralité de batteries secondaires (11-1, 11-2) qui peuvent être commandées de façon indépendante en charge avec de l'énergie générée par une collecte d'énergie (2) et en décharge pour délivrer de l'énergie stockée à un dispositif externe (3) ; et
une unité de commande de charge et de décharge (13) configurée pour commander, parmi la pluralité de batteries secondaires, une batterie secondaire à titre de batterie secondaire du côté de la charge chargée par l'énergie générée par la collecte d'énergie, et une batterie secondaire autre que la batterie secondaire de du côté de la charge à titre de batterie secondaire du côté de la décharge déchargée pour délivrer de l'énergie stockée au dispositif externe (3),
dans lequel au moins l'un ou l'autre parmi : une pluralité de seuils constituant un seuil de détection de quantité de charge associé à un niveau de batterie restant de la batterie secondaire du côté de la charge ; et une pluralité de seuils constituant chacun un seuil de détection de quantité de décharge associé à un niveau de batterie restant de la batterie secondaire du côté de la décharge, sont établis,
dans lequel des seuils associés au niveau de batterie restant de la batterie secondaire du côté de la décharge sont établis, respectivement, en association avec la pluralité de seuils établis chacun comme de seuil de détection de quantité de charge,
des seuils associés au niveau de batterie restant de la batterie secondaire du côté de la charge sont établis, respectivement, en association avec la pluralité de seuils établis chacun comme seuil de détection de quantité de décharge, et
l'unité de commande de charge et de décharge (13) :
lorsque le niveau de batterie restant de la batterie secondaire de côté de charge atteint l'un quelconque de la pluralité de seuils établis chacun comme seuil de détection de quantité de charge, détermine s'il faut ou non effectuer la commutation, par la comparaison entre un seuil qui est associé au niveau de batterie restant de la batterie secondaire du côté de la décharge et qui est établi en association avec le seuil atteint, et le niveau de batterie restant de la batterie secondaire du côté de la décharge ; et
lorsque le niveau de batterie restant de la batterie secondaire du côté de la décharge atteint l'un quelconque de la pluralité de seuils établis chacun comme seuil de détection de quantité de décharge, détermine s'il faut ou non effectuer la commutation, par la comparaison entre un seuil qui est associé au niveau de batterie restant de la batterie secondaire du côté de la charge et qui est établi en association avec le seuil atteint, et le niveau de batterie restant de la batterie secondaire du côté de la charge, et
dans lequel un seuil plus élevé associé au niveau de batterie restant de la batterie secondaire du côté de la décharge est associé à un seuil plus élevé établi comme seuil de détection de quantité de charge,
un seuil plus élevé associé au niveau de batterie restant de la batterie secondaire du côté de la charge est associé à un seuil plus élevé établi comme seuil de détection de quantité de décharge, et
l'unité de commande de charge et de décharge (13) :
lorsque le niveau de batterie restant de la batterie secondaire du côté de la charge devient supérieur ou égal à un seuil établi comme seuil de détection de quantité de charge, décharge la batterie secondaire du côté de la charge et charge la batterie secondaire du côté de la décharge avec l'énergie générée par la collecte d'énergie, dans le cas où le niveau de batterie restant de la batterie secondaire du côté de la décharge est inférieur à un seuil qui est associé à la batterie secondaire du côté de la décharge et qui est associé au seuil ; et
lorsque le niveau de batterie restant de la batterie secondaire du côté de la décharge devient inférieur ou égal à un seuil établi comme seuil de détection de quantité de décharge, décharge la batterie secondaire du côté de la charge et charge la batterie secondaire du côté de la décharge avec l'énergie générée par la collecte d'énergie, dans le cas où le niveau de batterie restant de la batterie secondaire du côté de la charge est supérieur à un seuil qui est associé à la batterie secondaire du côté de la charge et qui est associé au seuil.

2. Dispositif de charge (1) selon la revendication 1,
dans lequel, dans un état dans lequel l'alimentation en énergie du dispositif externe (3) est interrompue, lorsque le niveau de batterie restant de la batterie secondaire du côté de la charge devient supérieur ou égal à un seuil minimum de la pluralité de seuils établis chacun comme seuil de détection de quantité de charge, le dispositif de charge (1) est électriquement déconnecté du dispositif externe, puis reconnecté au dispositif externe.

3. Dispositif de charge (1) selon la revendication 1 ou 2,
dans lequel chaque batterie secondaire (11-1, 11-2) est susceptible de subir une charge à courant constant lorsque la charge démarre et une commutation vers une charge à tension constante lorsqu'une tension de batterie atteint une tension prédéterminée, et
un seuil maximum de la pluralité de seuils établis chacun comme seuil de détection de quantité de charge est une valeur égale au niveau de batterie restant de la batterie secondaire correspondant à la tension prédéterminée, ou proche de celui-ci.

4. Dispositif de charge (1) selon l'une quelconque des revendications 1 à 3,
dans lequel une section de génération d'énergie qui génère de l'énergie par la collecte d'énergie peut être fixée de façon amovible au dispositif de charge.

5. Dispositif de charge (1) selon l'une quelconque des revendications 1 à 4,
dans lequel, dans le cas où la délivrance d'énergie au dispositif externe (3) est interrompue en résultat du fait que le dispositif externe est complètement chargé, l'unité de commande de charge et de décharge (13) charge la pluralité de batteries secondaires une à une jusqu'à ce que le niveau de batterie restant de celles-ci atteigne un seuil d'arrêt de charge prédéterminé.

6. Dispositif de charge (1) selon la revendication 5,
dans lequel une pluralité de seuils peuvent être chacun établis comme seuil d'arrêt de charge, et
l'unité de commande de charge et de décharge (13) établit, comme seuil d'arrêt de charge, tout seuil sélectionné par une opération d'utilisateur parmi la pluralité de seuils pouvant chacun être établis comme seuil d'arrêt de charge.
